# EUROPEAN PATENT APPLICATION

(11) **EP 4 564 129 A1**
(43) Date of publication of application: **04.06.2025**
(21) Application number: 24797247.4
(22) Date of filing: 07.02.2024
(51) Int. Cl.: G06F 1/16, H05K 5/03, H05K 5/00

(54) **DISPLAY DEVICE**

(30) Priority: 25.04.2023 KR 20230054066; 31.01.2024 KR 20240014941
(71) Applicant: LG Electronics Inc., Yeongdeungpo-gu Seoul 07336 (KR)
(72) Inventor: KOONG, Hokyoung, Seoul 06772 (KR)
(74) Representative: Vossius & Partner Patentanwälte Rechtsanwälte mbB
(86) International application number: PCT/KR2024/001805
(87) International publication number: WO 2024/225585

(57) **Abstract**

Disclosed is a display device. The display device of the present disclosure includes: a display; a base to which the display is movably coupled; and a cover which is hinged to the base, and opens or closes the base, wherein the cover includes: an outer cover; a middle frame coupled to the outer cover; an inner cover opposite to the outer cover with respect to the middle frame; and coupling sets which are disposed along an edge of the inner cover and couple the inner cover to the middle frame.

## Description

### [Technical Field]

The present disclosure relates to a display device.

### [Background Art]

As information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, a liquid crystal panel includes a TFT substrate and a color filter substrate that face each other with a liquid crystal layer interposed therebetween, and may display an image by using light provided from a backlight unit. In addition, an OLED panel may display an image by depositing an organic material layer capable of self-emitting light on a substrate on which a transparent electrode is formed.

Recently, much research has been conducted on display devices that can be used outdoors. In addition, much research has been conducted on structures that improve the storage and portability of display devices.

### [Disclosure]

### [Technical Problem]

An object of the present disclosure is to solve the above-described problems and other problems.

Another object of the present disclosure may be to provide a structure that allows a display device to be easily stored and carried.

Another object of the present disclosure may be to provide a cover that opens or closes a base where a display is housed.

Another object of the present disclosure may be to provide a coupling structure for components of a cover.

Another object of the present disclosure may be to provide a structure that allows an inner cover to be easily coupled to or separated from a middle frame, and minimizes damage to the inner cover and/or the middle frame.

Another object of the present disclosure may be to provide a structure that increases convenience of assembly and disassembly and reduces costs by not using screws to assemble an inner cover and a middle frame.

### [Technical Solution]

According to an aspect of the present disclosure, there is provided a display device, including a display; a base to which the display is movably coupled; and a cover which is hinged to the base, and opens or closes the base, wherein the cover includes: an outer cover; a middle frame coupled to the outer cover; an inner cover opposite to the outer cover with respect to the middle frame; and coupling sets which are disposed along an edge of the inner cover and couple the inner cover to the middle frame.

### [Advantageous Effects]

The effects of the display device according to the present disclosure will be described as follows.

According to at least one of the embodiments of the present disclosure, there is provided a structure that can easily store and carry a display device.

According to at least one of the embodiments of the present disclosure, there is provided a cover that opens or closes a base where a display is housed.

According to at least one of the embodiments of the present disclosure, there is provided a coupling structure for components of a cover.

According to at least one of the embodiments of the present disclosure, there is provided a structure that allows an inner cover to be easily coupled to or separated from a middle frame, and minimizes damage to the inner cover and/or the middle frame.

According to at least one of the embodiments of the present disclosure, there is provided a structure that increases convenience of assembly and disassembly and reduces costs by not using screws to assemble an inner cover and a middle frame.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### [Description of Drawings]

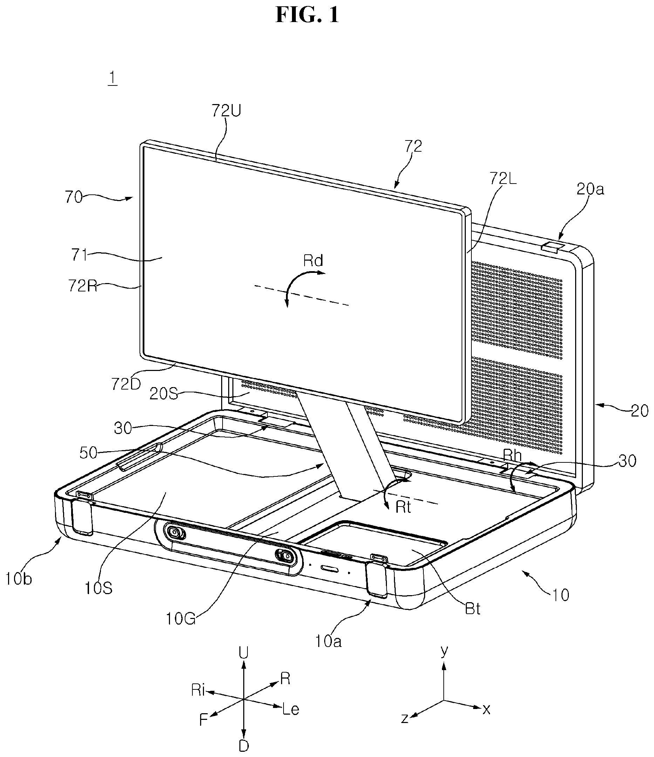

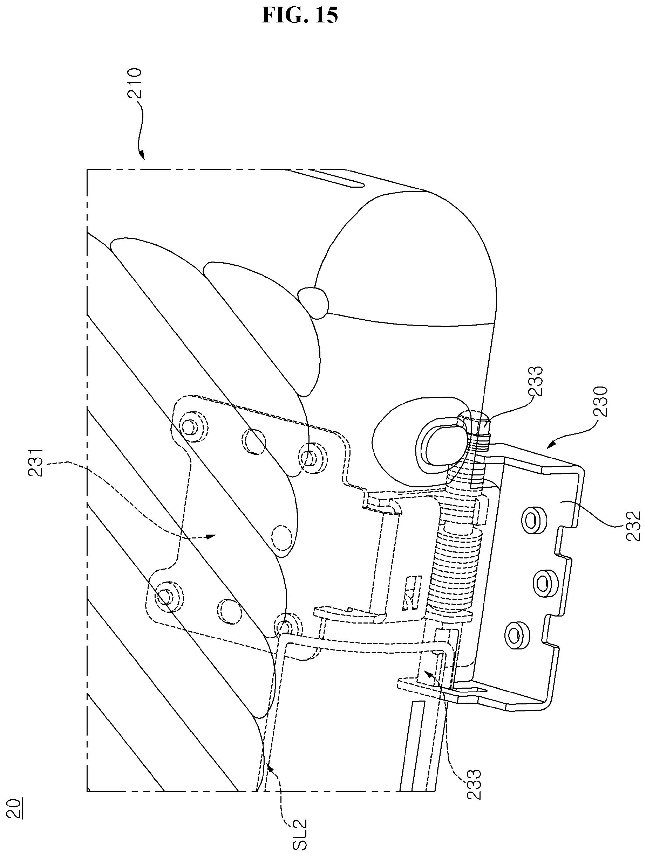

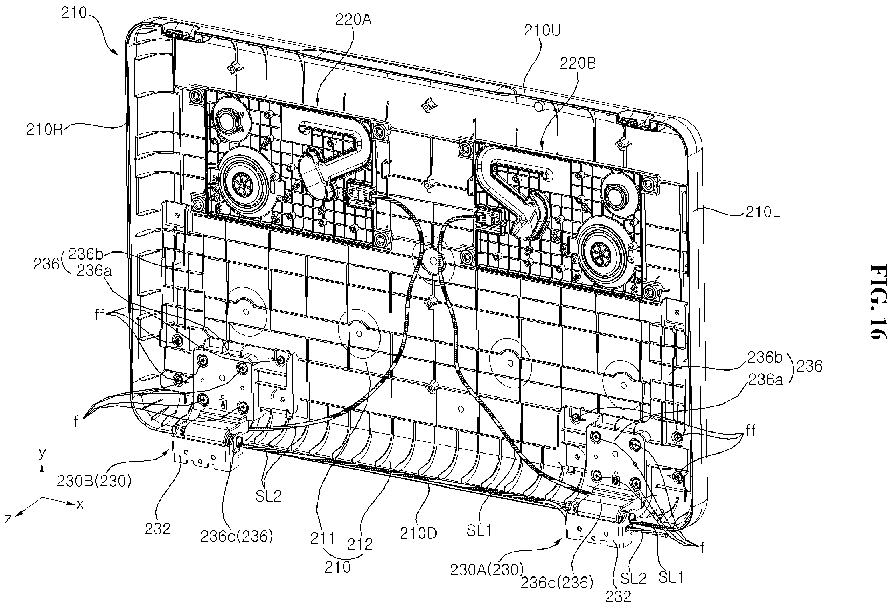

FIGS. 1 to 36 are diagrams illustrating examples of a display device according to embodiments of the present disclosure.

### [Mode for Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

The display panel of the present disclosure may be an LCD panel or an OLED panel, but the type of display panel applicable to the present disclosure is not limited thereto.

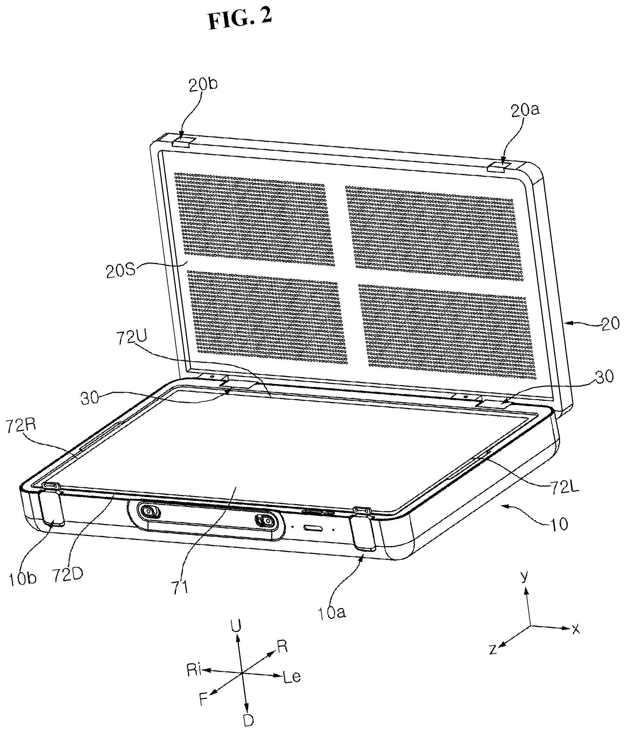

Referring to FIGS. 1 and 2, the display 70 may include a base 10, a cover 20, a hinge 30, an arm 50, and a display 70.

The base 10 may have an overall flat box shape. A seating portion 10S may be formed by being recessed downward from the upper surface of the base 10. The size of the seating portion 10S may correspond to the size of the display 70. For example, the base 10 may include a plastic material. The base 10 may be referred to as a lower body 10, a lower case 10, a lower housing 10, a bottom box 10, a bottom cabinet 10, or a bottom case 10.

The cover 20 may have an overall flat box shape. The outer shape of the cover 20 may resemble that of the base 10. A recessed portion 20S may be formed on one surface of the cover 20 and may be opposite to the seating portion 10S with respect to the display 70. For example, the cover 20 may include a plastic material. The cover 20 may be referred to as an upper body 20, an upper case 20, an upper housing 20, a top box 20, a top cabinet 20, or a top case 20.

One side of the hinge 30 may be adjacent to or located on one side of the base 10, may be coupled to the base 10, and may rotate about the central axis of the hinge 30. The other side of the hinge 30 may be adjacent to or located on one side of the cover 20, may be coupled to the cover 20, and may rotate about the central axis of the hinge 30. The one side of the base 10 may be one long side of the base 10, and the one side of the cover 20 may be one long side of the cover 20 adjacent to the one long side of the base 10. For example, a plurality of hinges 30 may be spaced apart from each other along the one long side. The number of hinges 30 may be two.

The arm 50 may extend in a direction intersecting the base 10. The arm 50 may have an overall square lumber shape. A groove 10G may be formed by being recessed downward from the seating portion 10S and may have a shape corresponding to the arm 50. One end of the arm 50 may be located on the groove 10G while being adjacent to one end of the groove 10G. The arm 50 may be rotatably coupled to the base 10 about a first axis adjacent to the one end of the arm 50 (see Rt in FIG. 1). The first axis may be parallel to the left-right direction. The other end of the arm 50 may be coupled to the central portion of the rear surface of the display 70. The display 70 may be rotatably coupled to the arm 50 about a second axis adjacent to the other end of the arm 50 (see Rd in FIG. 1). The second axis may be parallel to the first axis. The arm 50 may be referred to as a pole 50, a bar 50, or a lever 50.

The display 70 may include a display panel 71 and a side cover 72. The display panel 71 may define the front surface of the display 70 and display an image. The side cover 72 may extend along the circumference of the display panel 71 and cover the side surface of the display panel 71. A first part 72U may define the upper side of the side cover 72, and a second part 72D may define the lower side of the side cover 72. A third part 72L may define the left side of the side cover 72, and a fourth part 72R may define the right side of the side cover 72. The display 70 may be referred to as a display unit 70 or a display module 70.

For example, a user may pivot the arm 50 about the first axis. When the arm 50 pivots, the location of the other end of the arm 50 may be raised. A user may pivot the display 70 about the second axis so that the display panel 71 faces forward. A user may adjust the angle of the arm 50 with respect to the base 10 and the angle of the display 70 with respect to the arm 50.

For example, a user may pivot the arm 50 about the first axis. When the arm 50 reverse pivots, the location of the other end of the arm 50 may be lowered. In addition, the arm 50 may be seated on the groove 10G. A user may pivot the display 70 about the second axis so that the display panel 71 faces upward.

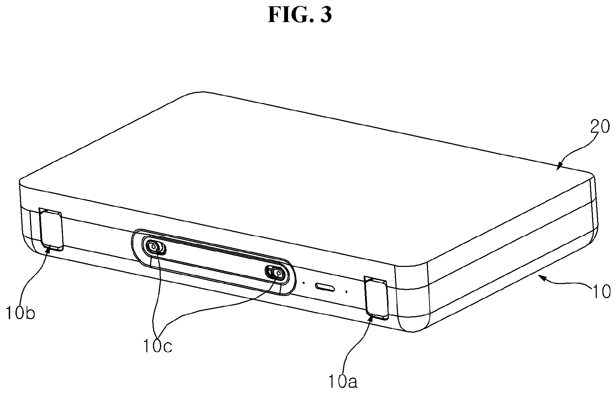

Referring to FIGS. 2 and 3, a user may pivot the cover 20 about the central axis of the hinge 30 so that the cover 20 is overlapped over the base 10. The display panel 71 may be sandwiched between the base 10 and the cover 20.

A lock 10a, 10b of the base 10 may be provided on the other side of the base 10 which is opposite to one side of the base 10 adjacent to the hinge 30. The lock 10a, 10b may be referred to as a lock assembly 10a, 10b or a locking unit 10a, 10b. A recessed portion 20a, 20b of the cover 20 may be provided on the other side of the cover 20 which is opposite to one side of the cover 20 adjacent to the hinge 30. After overlapping the cover 20 on the base 10, a user can lock the cover 20 by engaging the lock 10a, 10b to the recessed portion 20a, 20b. Accordingly, a user may carry the display 70 while storing it inside the base 10 and the cover 20. In addition, a handle (not shown) that a user can hold with his or her hand may be mounted on a button 10c formed on one side of the base 10.

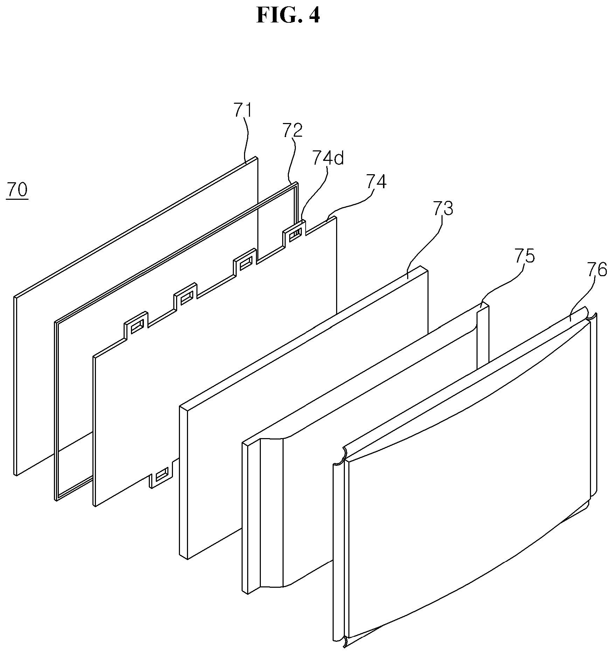

Referring to FIG. 4, the display 70 may include a display panel 71, a side cover 72, a backlight unit 73, 74, a frame 75, and a back cover 76.

The display panel 71 may form the front surface of the display 70, and may display images. The display panel 71 may display an image by having a plurality of pixels that output Red, Green or Blue (RGB) for each pixel in accordance with a timing. The display panel 71 may be divided into an active area where an image is displayed and a de-active area where an image is not displayed. The display panel 71 may include a front substrate and a rear substrate that are opposite to each other with a liquid crystal layer interposed therebetween. The display panel 71 may be referred to as an LCD panel.

The front substrate may include a plurality of pixels consisting of red, green, and blue subpixels. The front substrate may output light corresponding to the color of red, green, or blue according to a control signal.

The rear substrate may include switching elements. The rear substrate may switch a pixel electrode. For example, the pixel electrode may change the molecular arrangement of a liquid crystal layer according to an externally input control signal. The liquid crystal layer may include liquid crystal molecules. The arrangement of liquid crystal molecules may change in response to a voltage difference generated between the pixel electrode and a common electrode. The liquid crystal layer may transmit or block light provided from the backlight unit 73, 74 to the front substrate.

The side cover 72 may surround the circumference of the display panel 71, and cover the side surface of the display panel 71. The side cover 72 may be coupled to the display panel 71 or may support the display panel 71. The side cover 72 may be referred to as a guide panel 72, side frame 72 or middle cabinet 72.

The backlight unit 73, 74 may be located in a rear of the display panel 71. The backlight unit 73, 74 may include light sources. The backlight unit 73, 74 may be coupled to the frame 75 in front of the frame 75. The backlight unit 73, 74 may be driven by a full driving method or a partial driving method such as local dimming and impulsive driving. The backlight unit 73, 74 may include an optical sheet 74 and an optical layer 73.

The optical sheet 74 may evenly transmit light from the light source to the display panel 71. The optical sheet 74 may be composed of a plurality of layers. For example, the optical sheet 74 may include a prism sheet or a diffusion sheet. Meanwhile, a coupling portion 74d of the optical sheet 74 may be coupled to the frame 75 and/or the back cover 76.

The frame 75 may be located in a rear of the backlight unit 73, 74 and may support the components of the display 70. The edge of the frame 75 may be fixed to the side cover 72. For example, components such as backlight unit 73, 74 and a printed circuit board (PCB) on which a plurality of electronic devices are located may be coupled to the frame 75. For example, the frame 75 may include a metal material. The frame 75 may be referred to as a main frame 75, module cover 75, or cover bottom 75.

The back cover 76 may cover the rear of the frame 75. The back cover 76 may be coupled to the frame 75. For example, the back cover 76 may include a metal or plasttic material.

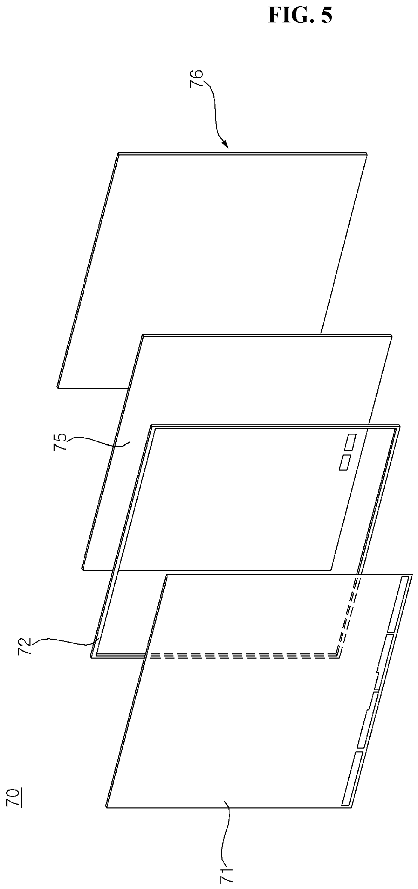

Referring to FIG. 5, the display 70 may include a display panel 71, a side cover 72, a frame 75, and a back cover 76.

The display panel 71 may form the front surface of the display 70 and display an image. The display panel 71 may divide an image into a plurality of pixels and output an image adjusted with color, brightness, and saturation for each pixel. The display panel 71 may be divided into an active area where images are displayed and a de-active area where images are not displayed. The display panel 71 may generate light corresponding to the color of red, green, or blue according to a control signal. The display panel 71 may be referred to as an OLED panel.

The side cover 72 may surround the circumference of the display panel 71 and cover the side surface of the display panel 71. The side cover 72 may be coupled to the display panel 71 or may support the display panel 71. The side cover 72 may be referred to as a guide panel 72, a side frame 72, or a middle cabinet 72.

The frame 75 may be located in a rear of the display panel 71, and the display panel 71 may be coupled thereto. The edge of the frame 75 may be fixed to the side cover 72. Electronic components may be mounted on the frame 75. For example, the frame 75 may include a metal material. The frame 75 may be referred to as a main frame 75, a module cover 75, a cover bottom 75, or a panel frame 75.

The back cover 76 may cover the rear of the frame 75. The back cover 76 may be coupled to the frame 75. For example, the back cover 76 may include metal or plastic material.

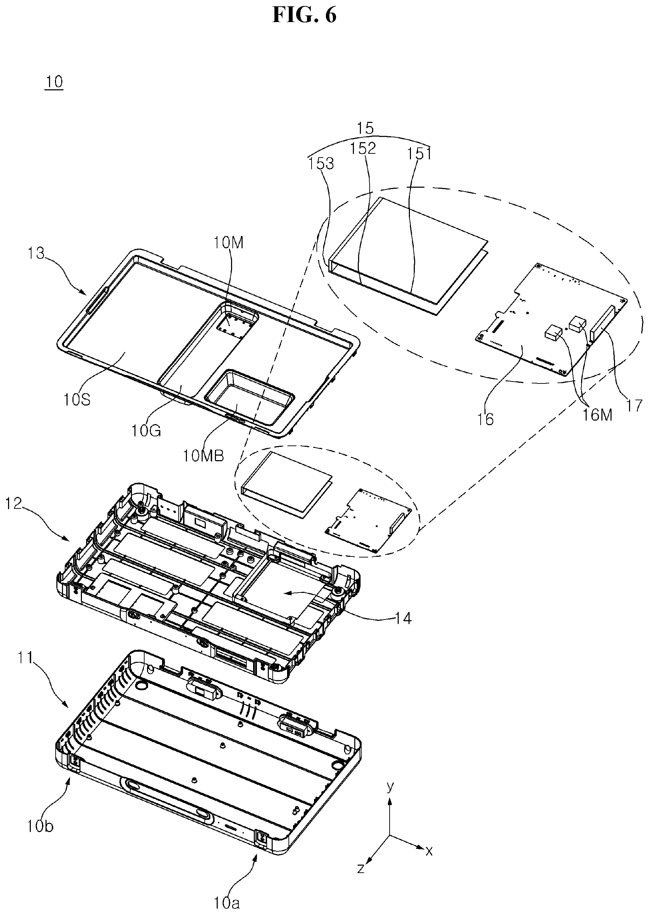

Referring to FIG. 6, the base 10 may include a bottom 11, a frame 12, a top 13, a jacket 15, and a substrate 16.

The bottom 11 may define the lower surface of the base 10 and may have an overall quadrangle tray shape. The bottom 11 may be referred to as an outer shell 11, an outer case 11, a bottom part 11, a housing 11, or a tray 11. The lock 10a, 10b may be provided on the side surface of the bottom 11.

The frame 12 may form the skeleton of the base 10. The frame 12 may be located on the bottom 11 and may be coupled to the bottom 11. The frame 12 may be referred to as an inner shell 12.

The top 13 may define the upper surface of the base 10 and may have an overall plate shape. The top 13 may be opposite to the bottom 11 with respect to the frame 12 and cover the frame 12. The top 13 may be detachably coupled to frame 12 and/or bottom 11. The top 13 may be referred to as a top part 13, a cap 13, a top case 13, or a top plate 13.

The seating portion 10S and the groove 10G may be formed on the upper surface of the top 13. A recessed portion 10M may be adjacent to one end of the groove 10G and may be formed by being recessed downward from the upper surface of the groove 10G. One end of the arm 50 (see FIG. 1) may be pivotably coupled to the recessed portion 10M.

For example, a mounting portion 10MB may be formed by being recessed downward from the upper surface of the top 13, and the battery Bt (see FIG. 1) may be detachably mounted on the mounting portion 10MB. Battery Bt may provide power to the display 70 (see FIG. 1) and may be rechargeable. For another example, the battery Bt may be embedded between the frame 12 and the top 13.

The jacket 15 and the substrate 16 may be located between the frame 12 and the top 13 and may be coupled to the frame 12. At least one device 16M may be mounted on the substrate 16. For example, the device 16M may be an IC chip or a System On Chip (SOC).

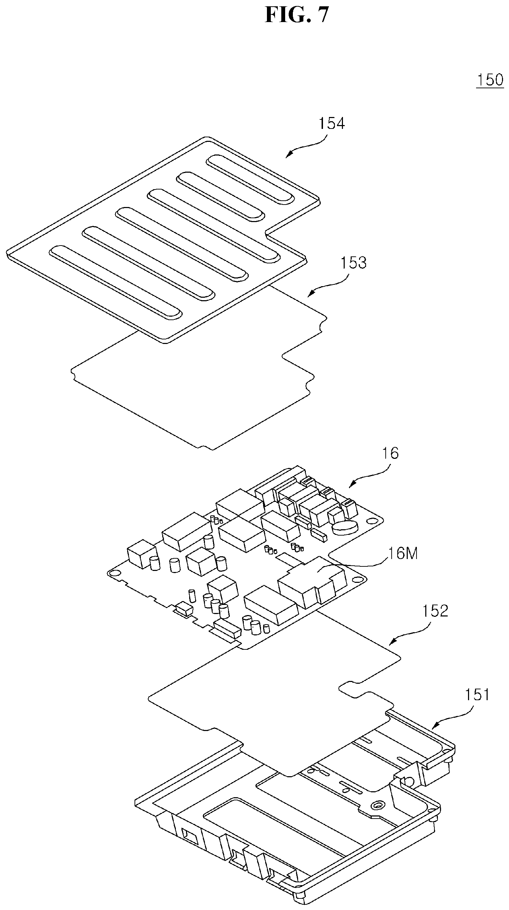

Referring to FIG. 7, a housing 150 may include a lower case 151 and an upper cover 154. The lower case 151 may have a tub shape and provide an internal accommodation space. For example, the lower case 151 may be an injection molded product made of a flame-retardant material. The lower case 151 may be made of a material having enhanced chemical resistance properties. The lower case 151 may have an opening to reduce weight. A lower plate 152 may be located at the bottom of the lower case 151. The lower plate 152 may include metal. The lower plate 152 may cover the opening of the lower case 151.

At least one electrical device 16M may be mounted on the substrate 16. For example, the substrate 16 may be a power supply unit PSU or a main board. The substrate 16 may be located on lower plate 152.

An upper plate 153 may be located on the substrate 16. The upper plate 153 may include metal. The upper plate 153 may face the lower plate 152.

The upper cover 154 may cover the upper plate 153 and close the lower case 151. The upper cover 154 may include metal. For example, the upper cover 154 may be aluminum. The upper cover 154 may be coupled to the lower case 151. Accordingly, the chemical resistance of the substrate 16 on which the electrical devices 16M are mounted can be improved.

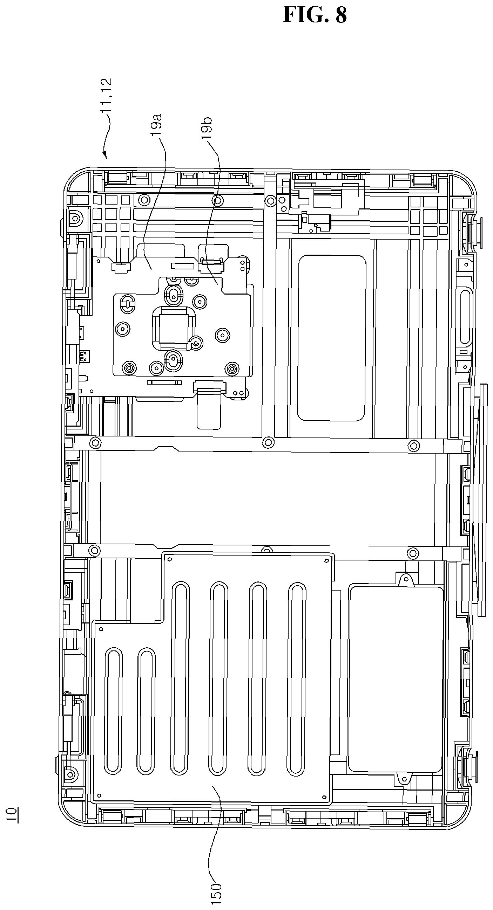

Referring to FIG. 8, the housing 150 containing the power supply unit 16 (see FIG. 7) may be mounted on or coupled to the frame 12 of the base 10. A main board 19a may be adjacent to the housing 150 of the power supply unit 16 and may be mounted on or coupled to the frame 12 of the base 10. The power supply unit 16 may supply power required for the display device 1 (see FIG. 1). The main board 19a may process image information displayed through the display panel 71 and/or sound information provided through a speaker assembly.

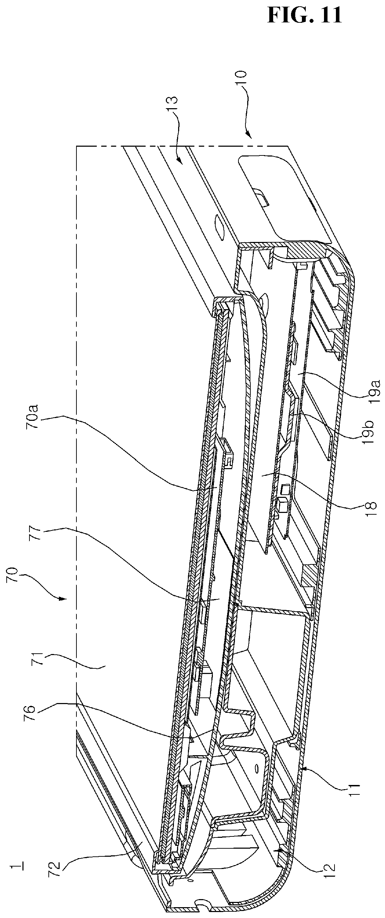

A shield plate 19b may cover a portion of the main board 19a and may be mounted or fixed on the frame 12. The shield plate 19b may prevent physical and electrical damage to the main board 19a. For example, the shielding member 18 (see FIG. 11), such as a graphite sheet, may cover at least a portion of the main board 19a.

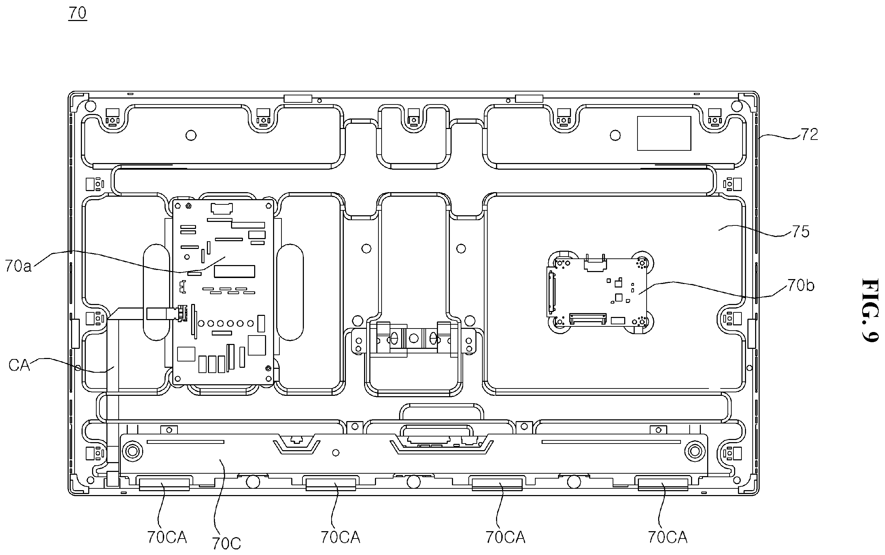

Referring to FIG. 9, a control board 70a, 70b, 70c may be mounted or fixed to the rear surface of the frame 75 of the display 70. For example, the control board 70a, 70b, 70c may be a power board 70a, a sub board 70b, or a source PCB 70c. Electronic devices may be mounted on the control board 70a, 70b, 70c.

A flexible cable CA may electrically connect the power board 70a and the display panel 71. The power board 70a may control power and/or signals provided to a light source of the display 70. The power board 70a may be referred to as a light source drive board 70a. The sub board 70a may process image information provided to the display panel 71 (see FIG. 1). The source PCB 70c may be mounted or fixed to the rear surface of the frame 75 while being adjacent to the lower side of the frame 75. A COF 70CA may electrically connect the source PCB 70c and the display panel 71. For example, a shielding member 77 (see FIG. 11) such as a graphite sheet may cover at least a portion of the power board 70a.

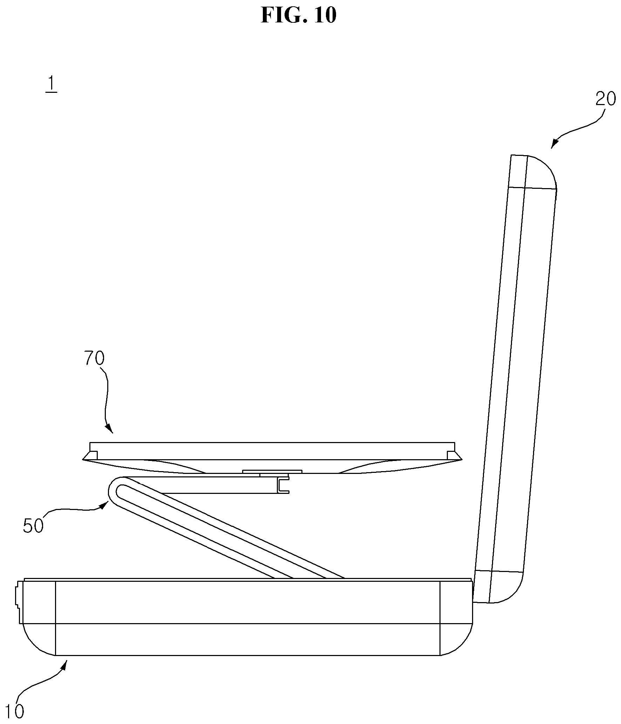

Referring to FIGS. 10 and 11, the display 70 may be stored inside the base 10 as the cover 20 is opened and closed from the base 10 around the hinge 30 (see FIG. 1). The display 70 may be moved outside of the base 10 by the arm 50 or may be stored on the base 10. When the display 70 is stored in the base 10, the display 70 and the base 10 may be disposed to be parallel to each other and face each other. The display panel 71 of the display 70 stored in the base 10 may face the cover 20.

The side cover 72 may cover the side surface of the display panel 71. The back cover 76 may be located at the rear of the display panel 71 and may be coupled to the side cover 72. The above-described FIG. 8 may represent the upper surface of the base 10 facing the display 70, and the above-described FIG. 9 may represent the rear surface of the display 70 facing the base 10.

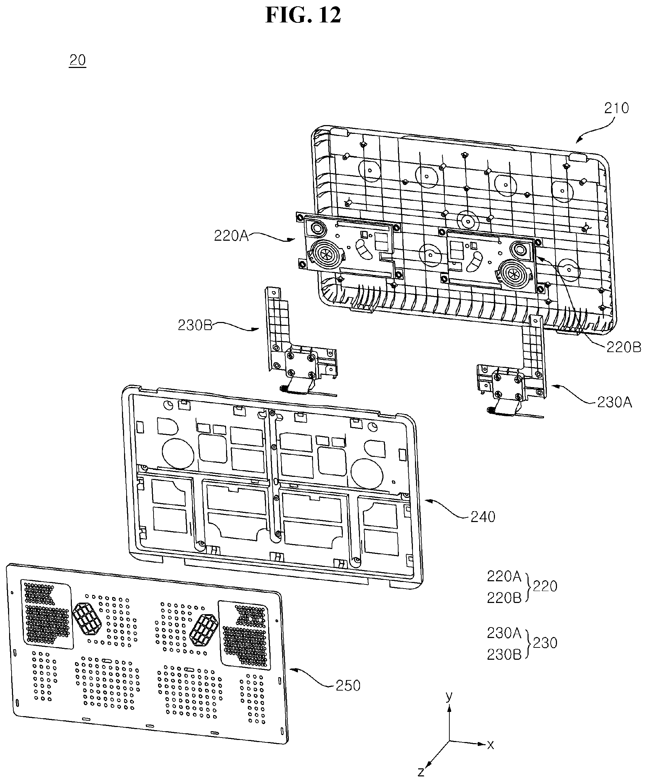

Referring to FIG. 12, the cover 20 may include an outer cover 210, a middle frame 240, and an inner cover 250. The outer cover 210 may have a tub shape and provide an internal accommodation space. The middle frame 240 may be coupled to the outer cover 210, and the inner cover 250 may be coupled to the middle frame 240. The middle frame 240 may be located between the outer cover 210 and the inner cover 250.

The speaker assembly 220 and the hinge assembly 230 may be located between the middle frame 240 and the outer cover 210.

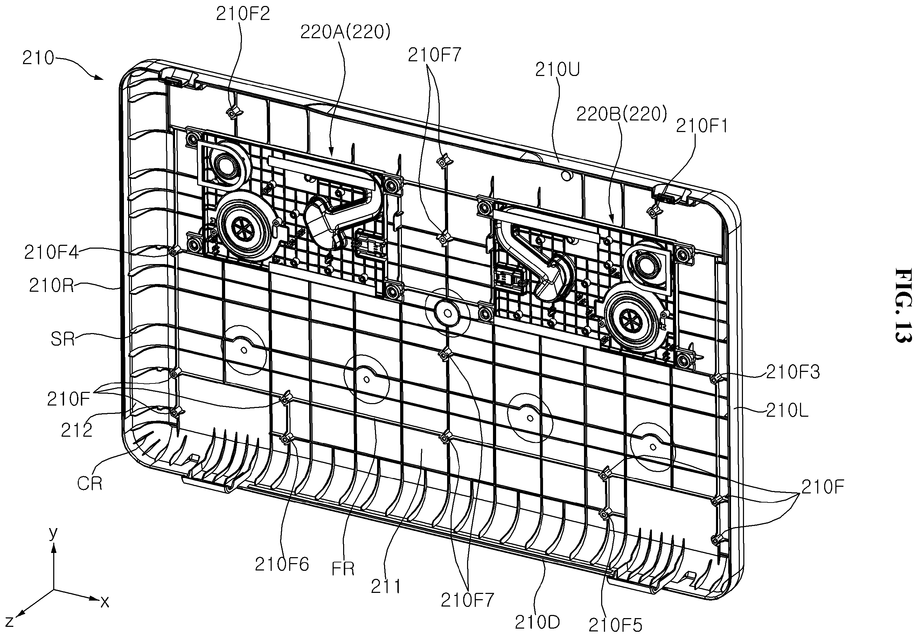

Referring to FIG. 13, the outer cover 210 may include a center part 211, a side part 212, and ribs FR, SR, and CR. The center part 211 may form a flat plate of the outer cover 210. The side part 212 may be bent forward from the circumference of the center part 211. The side part 212 may form a wall or dam on the outside of the center part 211.

The ribs FR, SR, CR may include a center rib FR, a side rib SR, and a corner rib CR. The center ribs FR may be formed on the inner surface of the center part 211. The center ribs FR may extend horizontally or vertically and may intersect with each other. The side ribs SR may be formed on the inner surface of the side part 212. The side rib SR may be adjacent to or connected to the center ribs FR. The corner ribs CR may be formed on the inner surface of a corner formed by the side part 212. Accordingly, the rigidity of the outer cover 210 may be improved, and the outer cover 210 may not be damaged by impact applied to the side and/or corner of the outer cover 210.

The speaker assembly 220 may be mounted on the outer cover 210. A plurality of speaker assemblies 220 may be mounted on the outer cover 210. A first speaker assembly 220B may be adjacent to the upper side 210U and the left side 210L of the outer cover 210. A second speaker assembly 220A may be adjacent to the upper side 210U and the right side 210R of the outer cover 210. The first speaker assembly 220B and the second speaker assembly 220A may provide stereo sound.

For example, the upper side 210U and the lower side 210D of the outer cover 210 may be long sides, and the left side 210L and the right side 210R of the outer cover 210 may be short sides.

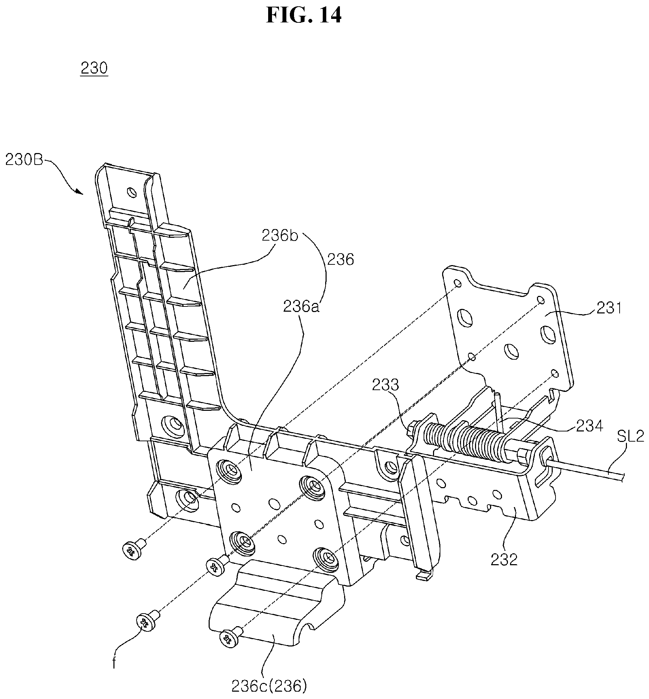

Referring to FIGS. 14 to 16, the hinge assembly 230 may include an upper bracket 231, a lower bracket 232, a hinge shaft 233, an elastic member 234, and a bracket 236. The upper bracket 231 may have a curved plate shape. A portion of the lower bracket 232 may overlap with a portion of the upper bracket 231, and the hinge shaft 233 may connect the upper bracket 231 and the lower bracket 232. The hinge shaft 233 may be fixed to the lower bracket 232, and the upper bracket 231 may be rotatably coupled to the hinge shaft 233. The elastic member 234 may be coupled to the hinge shaft 233. For example, the elastic member 234 may be a spring wound in a coil shape on the side surface of the hinge shaft 233. One end of the elastic member 234 may be fixed to the hinge shaft 233, and the other end of the elastic member 234 may support the upper bracket 231 and provide elastic force to the upper bracket 231.

The bracket 236 may be referred to as a reinforcing member 236. The bracket 236 may include a fixing part 236a and an expansion part 236b. The fixing part 236a may be coupled to or fixed to the upper bracket 231 by a fastening member f such as a screw. The expansion part 236b may extend from the fixing part 236a. The fixing part 236a and the expansion part 236b may have an overall L shape. The bracket 236 may further include a cover part 236c. The cover part 236c may extend from the fixing part 236a and cover the hinge shaft 233. The bracket 236 fixed to the upper bracket 231 may be mounted on the inside of the outer cover 210. For example, a fastening member ff such as a screw may penetrate the bracket 236 and be fastened to a fixing portion 210F (see FIG. 13) of the outer cover 210.

The plurality of hinge assemblies 230 may be spaced apart from each other. A first hinge assembly 230A may be adjacent to the lower side 210D and the left side 210L of the outer cover 210 and may be mounted on the outer cover 210. The second hinge assembly 230B may be adjacent to the lower side 210D and the right side 210R of the outer cover 210 and may be mounted on the outer cover 210. For example, the bracket 236 of the first hinge assembly 230A and the bracket 236 of the second hinge assembly 230B may be left and right symmetrical.

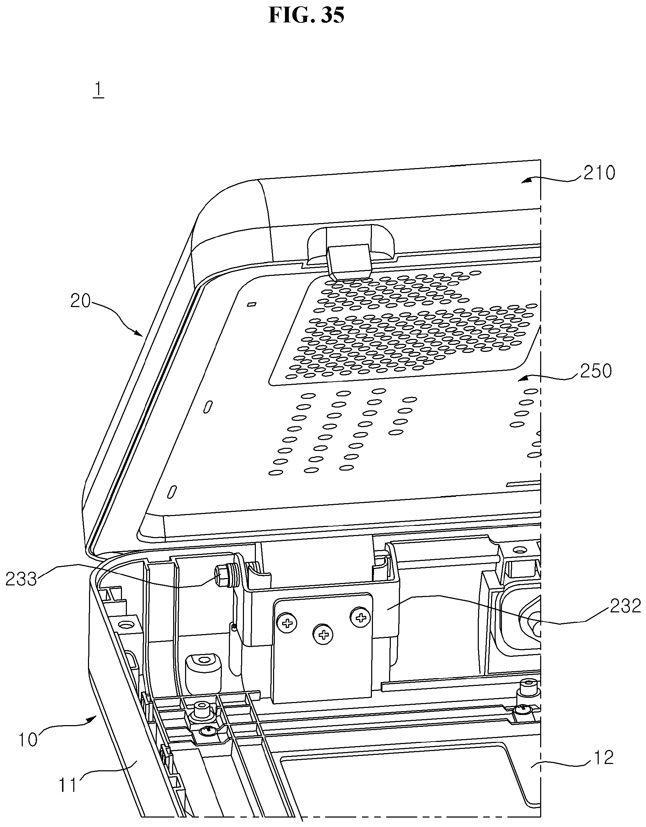

Accordingly, the outer cover 210 fixed to the upper bracket 231 through the bracket 236 may rotate around the hinge shaft 233. At this time, the lower bracket 232 may be fixed to the base 10 (see FIG. 35). When the upper bracket 231 of FIG. 14 is rotated counterclockwise (i.e., when rotated in the direction in which the cover 20 of FIG. 35 is closed), the elastic member 234 may be deformed, and the upper bracket 231 and the cover 20 may not be rotated rapidly due to the elastic member 234. When the upper bracket 231 of FIG. 14 is rotated clockwise (i.e., when rotated in the direction in which the cover 20 of FIG. 35 is opened), the elastic member 234 may be restored, and the upper bracket 231 and the cover 20 may be rotated smoothly by the elastic force of the elastic member 234.

A speaker cable SL1, SL2 may pass through the hinge assembly 230. A first speaker cable SL1 may be wired to the hinge shaft 233 of the first hinge assembly 230A and electrically connected to the first speaker assembly 220B. A second speaker cable SL2 may be wired to the hinge shaft 233 of the second hinge assembly 230B through the first hinge assembly 230A, and may be electrically connected to the second speaker assembly 220A.

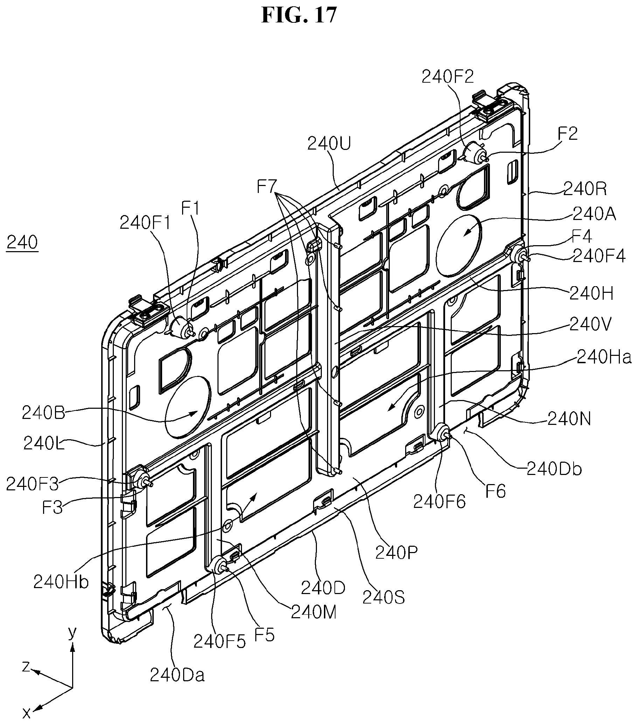

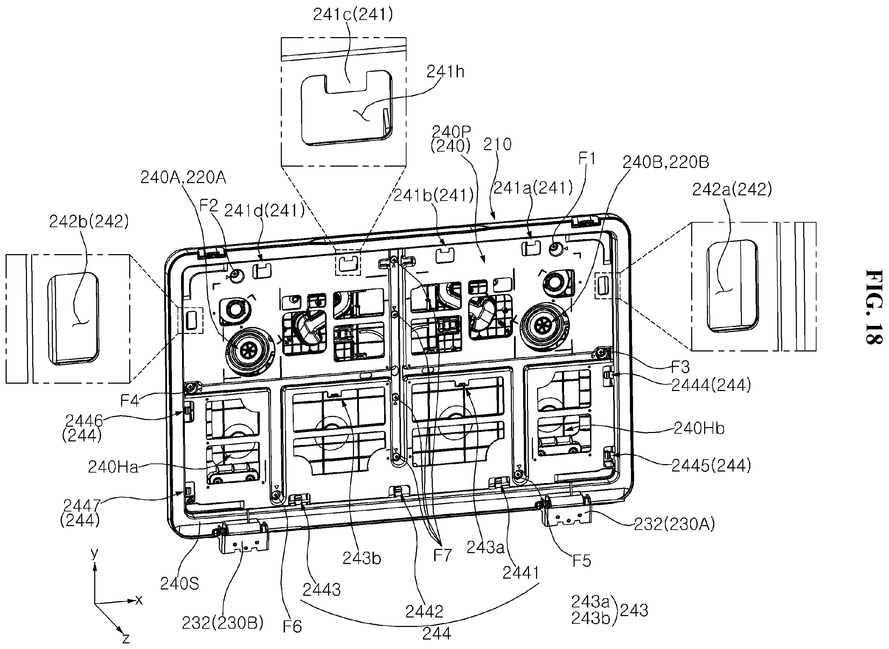

Referring to FIGS. 17 and 18, the middle frame 240 may include a base part 240P and a side part 240S. The base part 240P may form a flat plate of the middle frame 240. The side part 240S may be formed around the base part 240P and may form a step that is raised in a forward direction from the base part 240P. The side part 240S may have a U-shaped cross section. The side part 240S may form a wall or dam on the outside of the base part 240P.

A vertical pressed portion 240V may be formed by being pressed from the front surface of the base part 240P in a rear direction, and may extend in a vertical direction from the center portion of the base part 240P. A horizontal pressed portion 240H may be formed by being pressed from the front surface of the base part 240P in a rear direction, and may extend in a horizontal direction from the center portion of the base part 240P. The depth of the vertical pressed portion 240V may be deeper than the depth of the horizontal pressed portion 240H. The vertical pressed portion 240V and the horizontal pressed portion 240H may intersect with each other. A first pressed portion 240M may be formed by being pressed from the front surface of the base part 240P in a rear direction, and may extend downward from the center portion of the horizontal pressed portion 240H. A second pressed portion 240N may be formed by being pressed from the front surface of the base part 240P in a rear direction, and may extend downward from the center portion of the horizontal pressed portion 240H. The depth of the first and second pressed portions 240M and 240N may be the same as the depth of the horizontal pressed portion 240H. Accordingly, the rigidity of the middle frame 240 may be improved.

A plurality of coupling portions 240F1, 240F2, 240F3, 240F4, 240F5, and 240F6 may be formed on the base part 240P while being adjacent to the circumference of the middle frame 240. A plurality of coupling portions 240F1, 240F2, 240F3, 240F4, 240F5, and 240F6 may be formed by being pressed from the front surface of the base part 240P in a rear direction.

A first coupling portion 240F1 may be adjacent to the upper side 240U and the left side 240L of the middle frame 240, and may protrude in a rearward direction from the base part 240P. A first fixing portion 210F1 (see FIG. 13) may protrude in a forward direction from the center part 211 of the outer cover 210 and may be aligned with the first coupling portion 240F1. The first coupling portion 240F1 may be located on the first fixing portion 210F1. A first fastening member F1, such as a screw, may penetrate the first coupling portion 240F1 and be fastened to the first fixing portion 210F1.

A second coupling portion 240F2 may be adjacent to the upper side 240U and the right side 240R of the middle frame 240, and may protrude in a rearward direction from the base part 240P. A second fixing portion 210F2 (see FIG. 13) may protrude in a forward direction from the center part 211 of the outer cover 210, and may be aligned with the second coupling portion 240F2. The second coupling portion 240F2 may be located on the second fixing portion 210F2. A second fastening member F2, such as a screw, may penetrate the second coupling portion 240F2 and be fastened to the second fixing portion 210F2.

A third coupling portion 240F3 may be adjacent to the left distal end of the horizontal pressed portion 240H and may protrude in a rearward direction from the horizontal pressed portion 240H. A third fixing portion 210F3 (see FIG. 13) may protrude in a forward direction from the center part 211 of the outer cover 210 and may be aligned with the third coupling portion 240F3. The third coupling portion 240F3 may be located on the third fixing portion 210F3. A third fastening member F3, such as a screw, may penetrate the third coupling portion 240F3 and be fastened to the third fixing portion 210F3.

A fourth coupling portion 240F4 may be adjacent to the right distal end of the horizontal pressed portion 240H and may protrude in a rearward direction from the horizontal pressed portion 240H. A fourth fixing portion 210F4 (see FIG. 13) may protrude in a forward direction from the center part 211 of the outer cover 210 and may be aligned with the fourth coupling portion 240F4. The fourth coupling portion 240F4 may be located on the fourth fixing portion 210F4. A fourth fastening member F4, such as a screw, may penetrate the fourth coupling portion 240F4 and be fastened to the fourth fixing portion 210F4.

A fifth coupling portion 240F5 may be adjacent to the lower end of the first pressed portion 240M and may protrude in a rearward direction from the first pressed portion 240M. A fifth fixing portion 210F5 (see FIG. 13) may protrude in a forward direction from the center part 211 of the outer cover 210 and may be aligned with the fifth coupling portion 240F5. The fifth coupling portion 240F5 may be located on the fifth fixing portion 210F5. A fifth fastening member F5, such as a screw, may penetrate the fifth coupling portion 240F5 and be fastened to the fifth fixing portion 210F5.

A sixth coupling portion 240F6 may be adjacent to the lower end of the second pressed portion 240N and may protrude in a rearward direction from the second pressed portion 240N. A sixth fixing portion 210F6 (see FIG. 13) may protrude in a forward direction from the center part 211 of the outer cover 210 and may be aligned with the sixth coupling portion 240F6. The sixth coupling portion 240F6 may be located on the sixth fixing portion 210F6. A sixth fastening member F6, such as a screw, may penetrate the sixth coupling portion 240F6 and be fastened to the sixth fixing portion 210F6.

A seventh fixing portion 210F7 (see FIG. 13) may protrude in a forward direction from the center part 211 of the outer cover 210 and may be aligned with the vertical pressed portion 240V. The vertical pressed portion 240V may be located on the seventh fixing portions 210F7. Seventh fastening members F7, such as screw, may penetrate the vertical pressed portion 240V and be fastened to the seventh fixing portions 210F7.

Accordingly, the middle frame 240 may be fixed to the fixing portions 210F1, 210F2, 210F3, 210F4, 210F5, 210F6, and 210F7 of the outer cover 210. The rear surface of the base part 240P of the middle frame 240 may be spaced apart from the front surface of the center part 211 of the outer cover 210. The first and second speaker assemblies 220B and 220A may be located between the base part 240P and the center part 211.

A first slot 240Da may be adjacent to the left side 240L of the middle frame 240 and may be formed from the lower side 240D of the middle frame 240 to the inside of the middle frame 240. A portion of the first hinge assembly 230A may penetrate the first slot 240Da.

A second slot 240Db may be adjacent to the right side 240R of the middle frame 240 and may be formed from the lower side 240D of the middle frame 240 to the inside of the middle frame 240. A portion of the second hinge assembly 230B may penetrate the second slot 240Db.

Meanwhile, the vertical pressed portion 240V and the horizontal pressed portion 240H of the middle frame 240 may intersect with each other to divide the base part 240P into quadrants. A first hole 240B may be formed in a first quadrant of the base part 240P and may be aligned with the first speaker assembly 220B. The first hole 240B may be formed of holes of different sizes and shapes. A second hole 240A may be formed in a second quadrant of the base part 240P and may be aligned with the second speaker assembly 220A. The second hole 240A may be formed of holes of different sizes and shapes. A third hole 240Ha may be formed in a third quadrant of the base part 240P. A third hole 240Ha may be formed of holes of different sizes and shapes. A fourth hole 240Hb may be formed in a fourth quadrant of the base part 240P. The fourth hole 240Hb may be formed of holes of different sizes and shapes.

Referring to FIG. 18, an insertion protrusion 241, an insertion hole 242, and a latch 244 may be formed on the middle frame 240 while being adjacent to the circumference of the middle frame 240. A support protrusion 243 may be formed on the middle frame 240 at or adjacent to the center portion of the middle frame 240. The insertion protrusion 241, the insertion hole 242, and the latch 244 may be collectively referred to as outer coupling portions 241, 242, and 244 of the middle frame 240. The support protrusion 243 may be referred to as an inner coupling portion 243 of the middle frame 240. For example, the upper and lower sides of the middle frame 240 may be long sides, and the left and right sides of the middle frame 240 may be short sides.

The insertion protrusion 241 may be adjacent to the upper side of the middle frame 240. A through hole 241h may be formed to penetrate the base part 240P of the middle frame 240, and the insertion protrusion 241 may protrude from the boundary of the through hole 241h to the through hole 241h. For example, the through hole 241h may be a quadrangle hole, and the insertion protrusion 241 may be a quadrangle protrusion protruding downward from the upper boundary of the through hole 241h. The width of the insertion protrusion 241 may be smaller than the width of the through hole 241h. The edges of the insertion protrusion 241 may be spaced apart from the boundary of the through hole 241h. The plurality of insertion protrusions 241a, 241b, 241c, and 241d may be spaced apart from each other along the upper side of the middle frame 240. The insertion protrusion 241 may be referred to as an insert tip 241 or a top protrusion 241.

The insertion hole 242 may be adjacent to the left or right side of the middle frame 240. A first insertion hole 242a may be adjacent to the left side of the middle frame 240 and may be formed to penetrate the base part 240P of the middle frame 240. The first insertion hole 242a may be a quadrangle hole. A second insertion hole 242b may be adjacent to the right side of the middle frame 240 and may be formed to penetrate the base part 240P of the middle frame 240. The second insertion hole 242b may be a quadrangle hole. The first and second insertion holes 242a and 242b may be located above the horizontal pressed portion 240H.

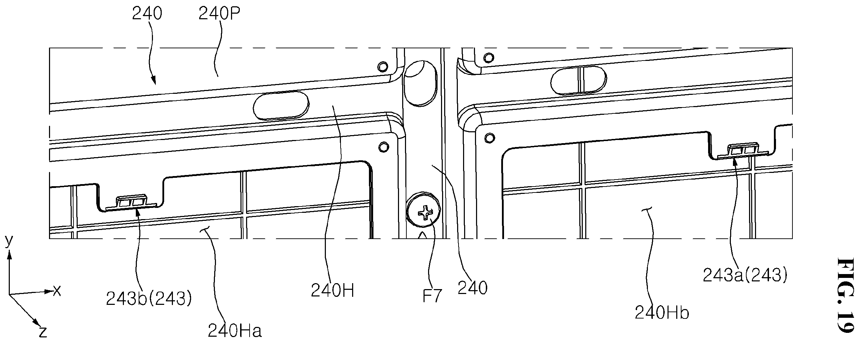

Referring to FIG. 19, the support protrusion 243 may be located below the horizontal pressed portion 240H. The support protrusion 243 may be located on the left or right side of the vertical pressed portion 240V. The support protrusion 243 may be referred to as a holding tip 243. A first support protrusion 243a may be adjacent to the left side of the vertical pressed portion 240V, and may protrude from the boundary of the fourth hole 240Hb to the fourth hole 240Hb. For example, the first support protrusion 243a may be a quadrangle protrusion protruding downward from the upper boundary of the fourth hole 240Hb. A second support protrusion 243b may be adjacent to the right side of the vertical pressed portion 240V and may protrude from the boundary of the third hole 240Ha to the third hole 240Ha. For example, the second support protrusion 243b may be a quadrangle protrusion protruding downward from the upper boundary of the third hole 240Ha.

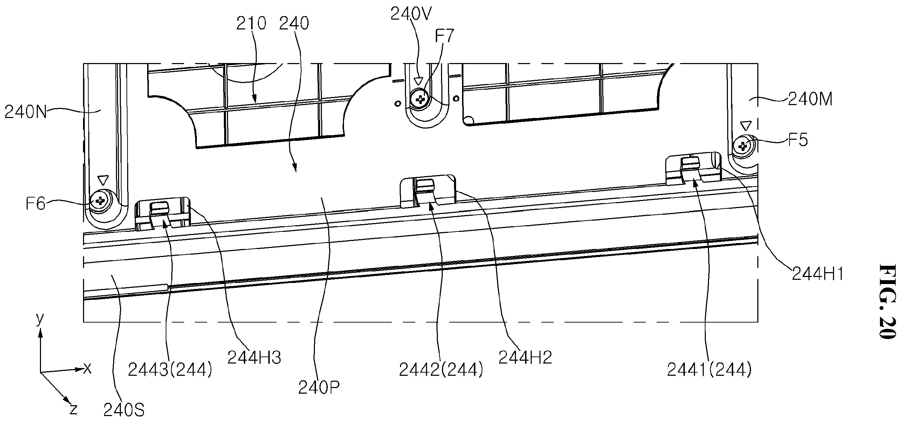

Referring to FIGS. 20 to 22, the latch 244 may be adjacent to the lower side, left side, or right side of the middle frame 240. The latch 244 may be formed inside the side part 240S of the middle frame 240, and the latch hole may be formed around the latch 244. The latch hole may be formed to penetrate the base part 240P and the side part 240S of the middle frame 240, and the latch 244 may protrude from the side part 240S toward the latch hole. The latch 244 may be referred to as a lever 244 or a moving lever 244. The latch 244 may have elasticity.

The plurality of latches 244 may be adjacent to the lower side of the middle frame 240 and may be spaced apart from each other along the lower side. A first latch 2441 may protrude from the inside of the side part 240S toward a first latch hole 244H1 of the middle frame 240. A second latch 2442 may protrude from the inside of the side part 240S toward a second latch hole 244H2 of the middle frame 240. A third latch 2443 may protrude from the inside of the side part 240S toward a third latch hole 244H3 of the middle frame 240. For example, the second latch 2442 may be located below the vertical pressed portion 240V, and the first latch 2441 and the third latch 2443 may be opposite to each other with respect to the second latch 2442.

At least one latch 244 may be adjacent to the left side of the middle frame 240 and may be located below the horizontal pressed portion 240H. The latches 244 may be spaced apart from each other along the left side of the middle frame 240. A fourth latch 2444 may protrude from the inside of the side part 240S toward a fourth latch hole 244H4 of the middle frame 240. A fifth latch 2445 may protrude from the inside of the side part 240S toward a fifth latch hole 244H5 of the middle frame 240. For example, the fourth latch 2444 may be adjacent to the lower side of the horizontal pressed portion 240H, and the fifth latch 2445 may be adjacent to the lower left corner of the middle frame 240.

At least one latch 244 may be adjacent to the right side of the middle frame 240 and may be located below the horizontal pressed portion 240H. The latches 244 may be spaced apart from each other along the right side of the middle frame 240. A sixth latch 2446 may protrude from the inside of the side part 240S toward a sixth latch hole 244H6 of the middle frame 240. A seventh latch 2447 may protrude from the inside of the side part 240S toward a seventh latch hole 244H7 of the middle frame 240. For example, the sixth latch 2446 may be adjacent to the lower side of the horizontal pressed portion 240H, and the seventh latch 2447 may be adjacent to the lower right corner of the middle frame 240.

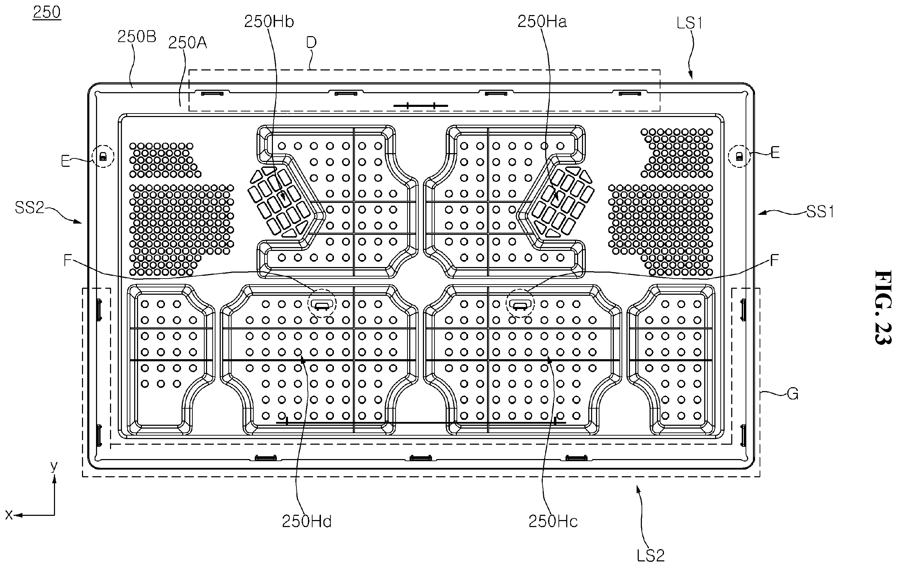

Referring to FIG. 23, the inner cover 250 may include a body 250A and a cover 250B. The body 250A may have a quadrangle plate shape. The body 250A may include a plastic material. A plurality of holes may be formed to penetrate the body 250A. A first hole 250Hb may be aligned with the first hole 240B (see FIGS. 17 and 18) of the middle frame 240 and may be composed of a plurality of holes. A second hole 250Ha may be aligned with the second hole 240A (see FIGS. 17 and 18) of the middle frame 240 and may be composed of a plurality of holes. A third hole 250Hc may be aligned with the third hole 240Ha of the middle frame 240 and may be composed of a plurality of holes. A fourth hole 250Hd may be aligned with the fourth hole 240Hb of the middle frame 240 and may be composed of a plurality of holes.

The cover 250B may cover the front surface of the body 250A. The cover 250B may include a fabric material. That is, pores may be formed in the cover 250B. The cover 250B may be coupled or attached to body 250A. For example, the cover 250B may cover the edge of the body 250A and may be ultrasonically fused to the rear surface of the body 250A.

For example, the upper and lower sides of the inner cover 250 may be long sides LS1 and LS2, and the left and right sides of the inner cover 250 may be short sides SS2 and SS1.

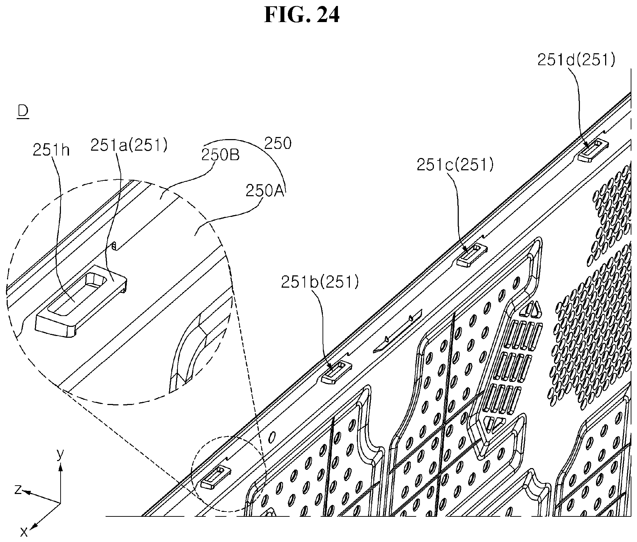

Referring to FIG. 24, a ring 251 may protrude in a rearward direction from the rear surface of the body 250A while being adjacent to the upper side of the inner cover 250. A hole 251h of the ring 251 may be formed to penetrate the ring 251 vertically, and may be referred to as a hold hole 251h. For example, the ring 251 may be a quadrangle ring. A plurality of rings 251a, 251b, 251c, and 251d may be spaced apart from each other along the upper side of the inner cover 250. Each of the plurality of rings 251a, 251b, 251c, and 251d may be aligned with each of the plurality of insertion protrusions 241a, 241b, 241c, 241d (see FIG. 18) of the middle frame 240.

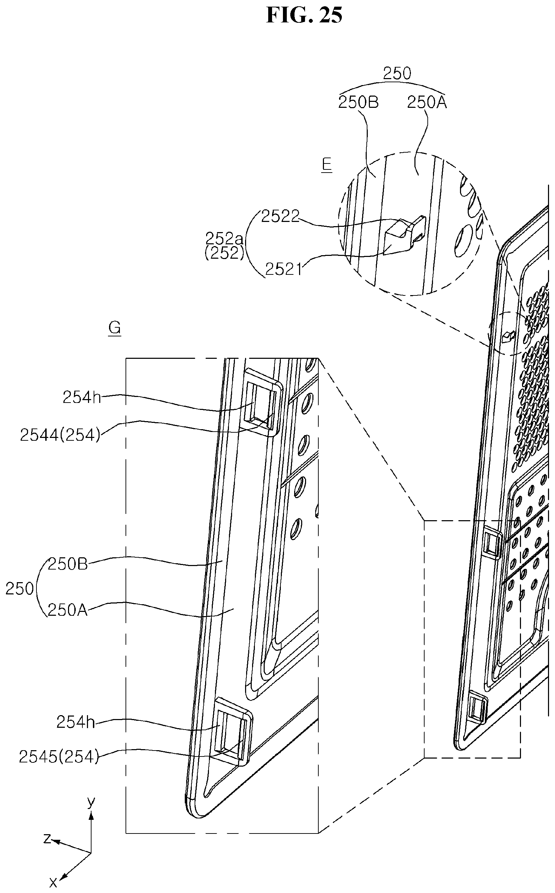

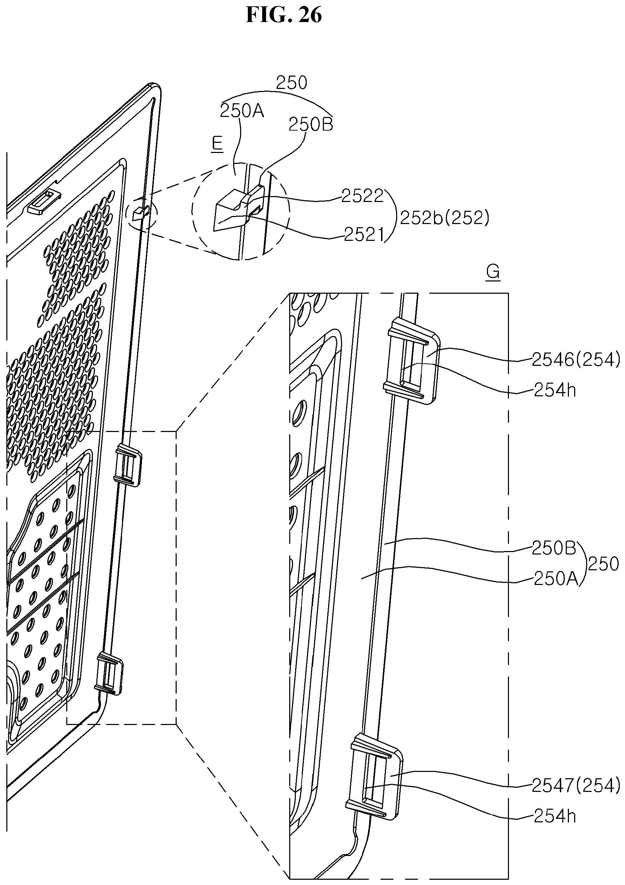

Referring to FIGS. 25 and 26, a locking protrusion 252 may be adjacent to the left or right side of the inner cover 250. The locking protrusion 252 may be referred to as a holder 252.

A first locking protrusion 252a may be adjacent to the left side of the inner cover 250 and may be formed on the rear surface of the body 250A. A first part 2521 of the first locking protrusion 252a may protrude in a rearward direction from the rear surface of the body 250A. A second part 2522 of the first locking protrusion 252a may be bent upward from the distal end of the first part 2521. The first locking protrusion 252a may be aligned with the first insertion hole 242a (see FIG. 18) of the middle frame 240.

A second locking protrusion 252b may be adjacent to the right side of the inner cover 250 and may be formed on the rear surface of the body 250A. The first part 2521 of the second locking protrusion 252b may protrude in a rearward direction from the rear surface of the body 250A. The second part 2522 of the second locking protrusion 252b may be bent upward from the distal end of the first part 2521. The second locking protrusion 252b may be aligned with the second insertion hole 242b (see FIG. 18) of the middle frame 240.

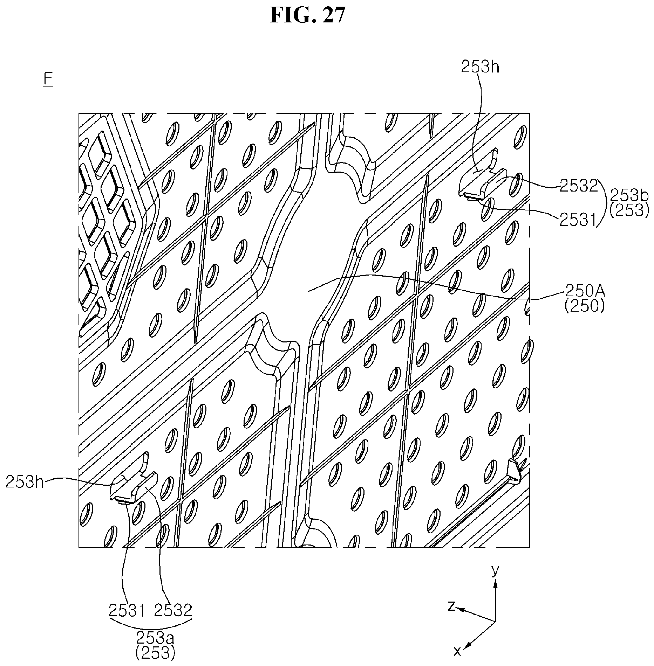

Referring to FIG. 27, a holding protrusion 253 may be located near the center portion of the inner cover 250. The holding protrusion 253 may be referred to as a holding lever 253.

A first holding protrusion 253a may be aligned with the first support protrusion 243a (see FIG. 19) of the middle frame 240. The hole 253h may be formed in the body 250A to correspond to the first holding protrusion 253a. For example, the first holding protrusion 253a may be formed by bending a portion of the body 250A, and as a result, a hole 253h may be formed. The first part 2531 of the first holding protrusion 253a may protrude in rearward direction from the rear surface of the body 250A. The second part 2532 of the first holding protrusion 253a may be bent upward from the distal end of the first part 2531.

A second holding protrusion 253b may be aligned with the second support protrusion 243b (see FIG. 19) of the middle frame 240. The hole 253h may be formed in the body 250A to correspond to the second holding protrusion 253b. For example, the second holding protrusion 253b may be formed by bending a portion of the body 250A, and as a result, a hole 253h may be formed. The first part 2531 of the second holding protrusion 253b may protrude in a rearward direction from the rear surface of the body 250A. The second part 2532 of the second holding protrusion 253b may be bent upward from the distal end of the first part 2531.

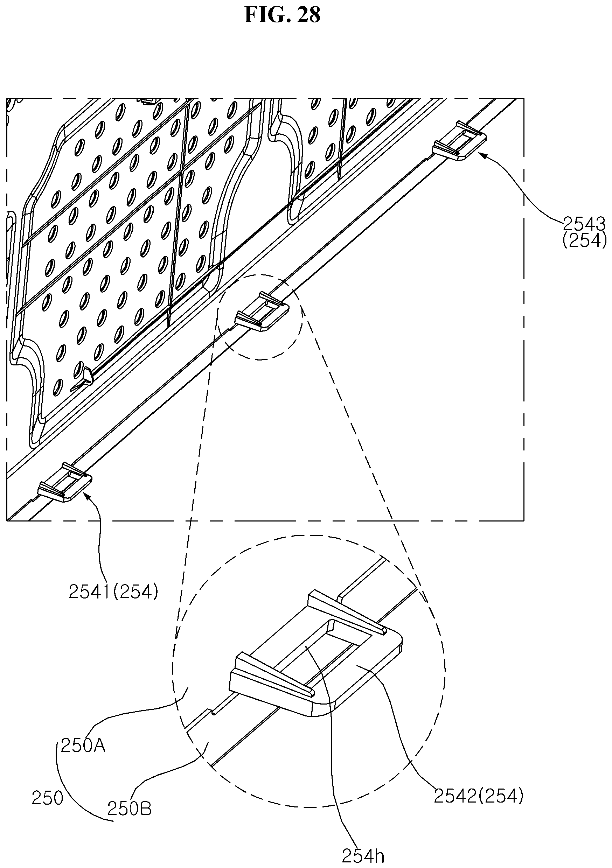

Referring to FIG. 28, the holder 254 may be adjacent to the lower side of the inner cover 250 and may protrude in a rearward direction from the rear surface of the body 250A. The holder 254 may have a ring shape. For example, holder 254 may be a quadrangle ring. The hole 254h of the holder 254 may be formed to penetrate the holder 254 vertically, and may be referred to as a latch hole 254h or a lever hole 254h. A first holder 2541, a second holder 2542, and a third holder 2543 may be spaced apart from each other along the lower side of the inner cover 250. Each of the first holder 2541, the second holder 2542, and the third holder 2543 may be aligned with each of the first latch 2441, the second latch 2442, and the third latch 2443 (see FIG. 20).

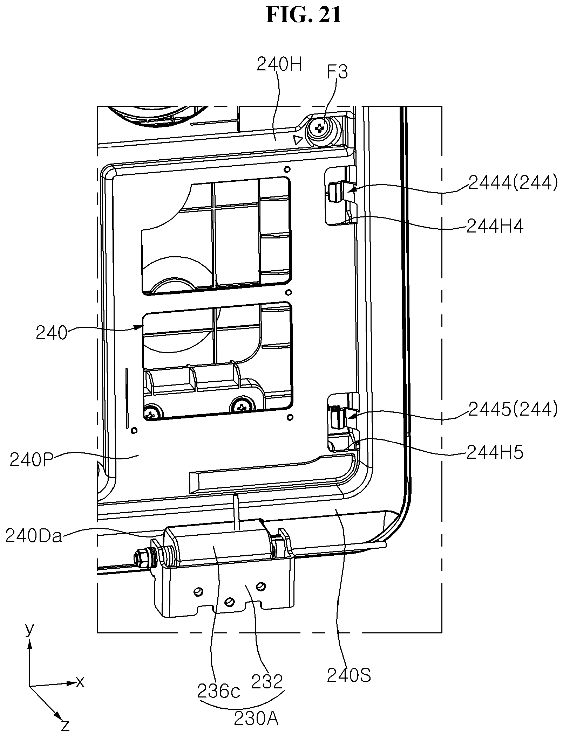

Referring again to FIG. 25, the holder 254 may be adjacent to the left side of the inner cover 250 and may protrude in a rearward direction from the rear surface of the body 250A. The holder 254 may have a ring shape. For example, holder 254 may be a quadrangle ring. The hole 254h of the holder 254 may be formed to penetrate the holder 254 from side to side, and may be referred to as a latch hole 254h or a lever hole 254h. A fourth holder 2544 and a fifth holder 2545 may be spaced apart from each other along the left side of the inner cover 250. Each of the fourth holder 2544 and the fifth holder 2545 may be aligned with each of the fourth latch 2444 and the fifth latch 2445 (see FIG. 21).

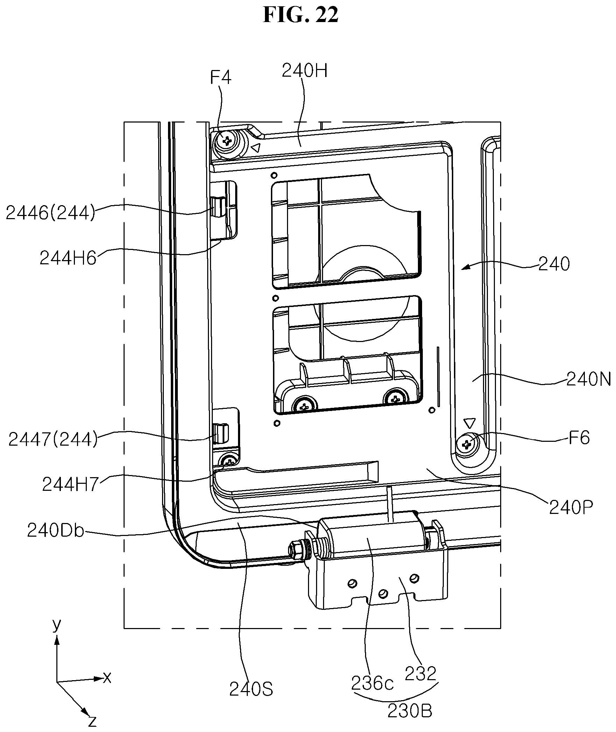

Referring again to FIG. 26, the holder 254 may be adjacent to the right side of the inner cover 250 and may protrude in a rearward direction from the rear surface of the body 250A. The holder 254 may have a ring shape. For example, holder 254 may be a quadrangle ring. The hole 254h of the holder 254 may be formed to penetrate the holder 254 from side to side, and may be referred to as a latch hole 254h or a lever hole 254h. A sixth holder 2546 and a seventh holder 2547 may be spaced apart from each other along the right side of the inner cover 250. Each of the sixth holder 2546 and the seventh holder 2547 may be aligned with each of the sixth latch 2446 and the seventh latch 2447 (see FIG. 22).

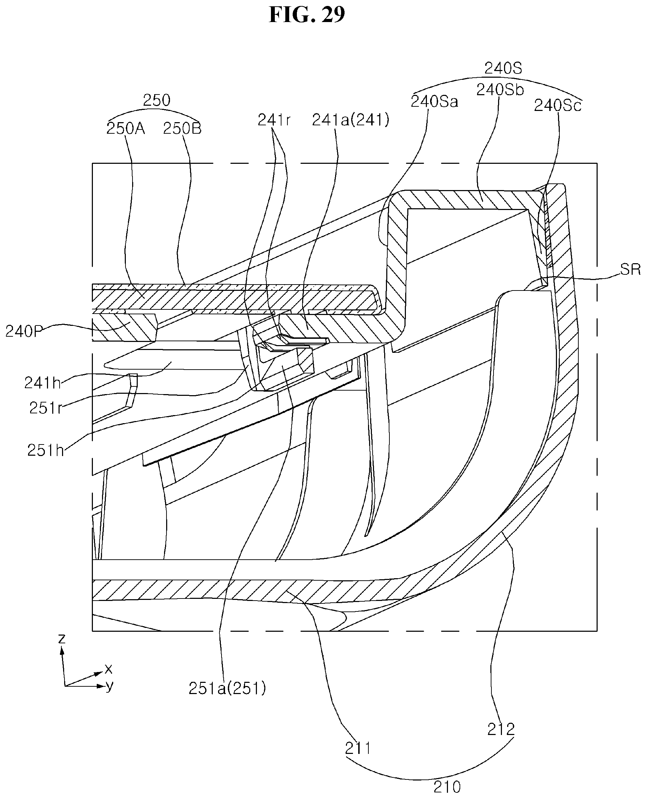

Referring to FIGS. 29 to 33, a user may couple the inner cover 250 to the middle frame 240 coupled to the outer cover 210. To this end, a user may approach the inner cover 250 to the middle frame 240 while tilting the inner cover 250 so that the lower side of the inner cover 250 is lifted in a forward direction from the middle frame 240. Next, a user may insert the inner cover 250 into the middle frame 240 from top to bottom.

Referring to FIG. 29, a user may insert the ring 251 of the inner cover 250 into the through hole 241h of the middle frame 240. Then, the user may move the inner cover 250 so that the insertion protrusion 241 of the middle frame 240 is inserted into the hole 251h of the ring 251 of the inner cover 250. The hole 251h may be a horizontally long slot. The rib 241r may be formed on one side of the insertion protrusion 241 and may improve the rigidity of the insertion protrusion 241. The rib 251r may be formed on one side of the ring 251 and may improve the rigidity of the ring 251. The insertion protrusion 241 and the ring 251 may be referred to as a first coupling set 241, 251. Accordingly, the portion adjacent to the upper side of the inner cover 250 may be caught by the middle frame 240.

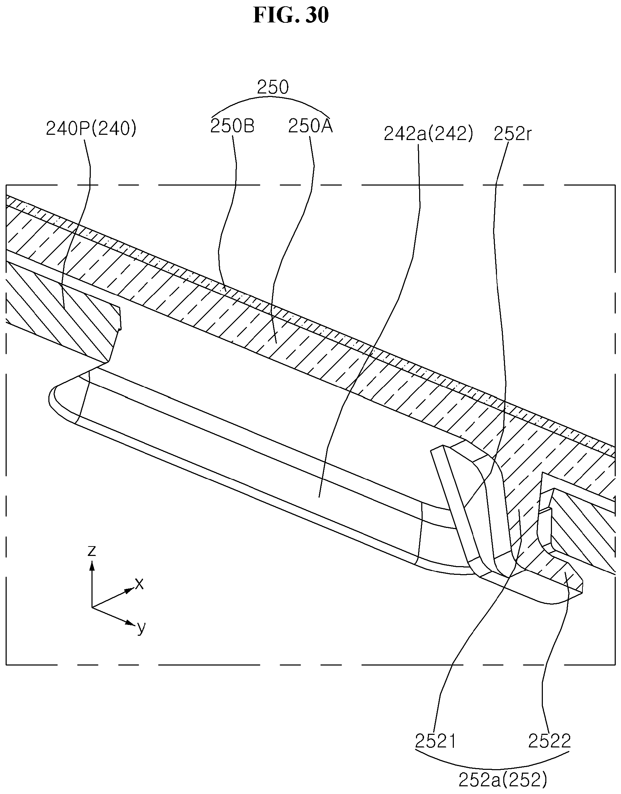

Referring to FIG. 30, a user may insert the locking protrusion 252 of the inner cover 250 into the insertion hole 242 of the middle frame 240. Then, the user may move the inner cover 250 so that the first part 2521 of the locking protrusion 252 is caught on the upper boundary of the insertion hole 242 of the middle frame 240. A rib 252r may be formed on one side of the locking protrusion 252 and may improve the rigidity of the locking protrusion 252. The insertion hole 242 and the locking protrusion 252 may be referred to as a second coupling set 242, 252. Accordingly, the second part 2522 of the locking protrusion 252 may be caught on the rear surface of the middle frame 240, and as a result, the upper portion of the left side and the upper portion of the right side of the inner cover 250 may be caught by the middle frame 240.

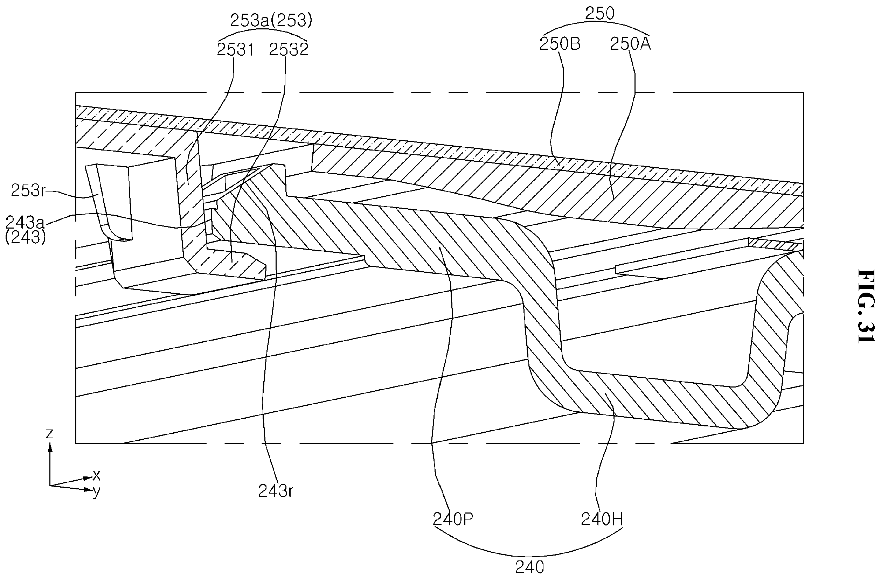

Referring to FIG. 31, a user may move the inner cover 250 so that the holding protrusion 253 of the inner cover 250 is engaged with the support protrusion 243 of the middle frame 240. The first part 2531 of the holding protrusion 253 may be in contact with or adjacent to the lower side of the support protrusion 243, and the second part 2532 of the holding protrusion 253 may be engaged with the rear surface of the support protrusion 243. The support protrusion 243 and the holding protrusion 253 may be referred to as a third coupling set 243, 253. A rib 243r may be formed on the front surface of the support protrusion 243 and may form an inclined surface. The inclined surface of the rib 243r may be opposite to the holding protrusion 253. Accordingly, the area near the center portion of the inner cover 250 may be caught by the middle frame 240.

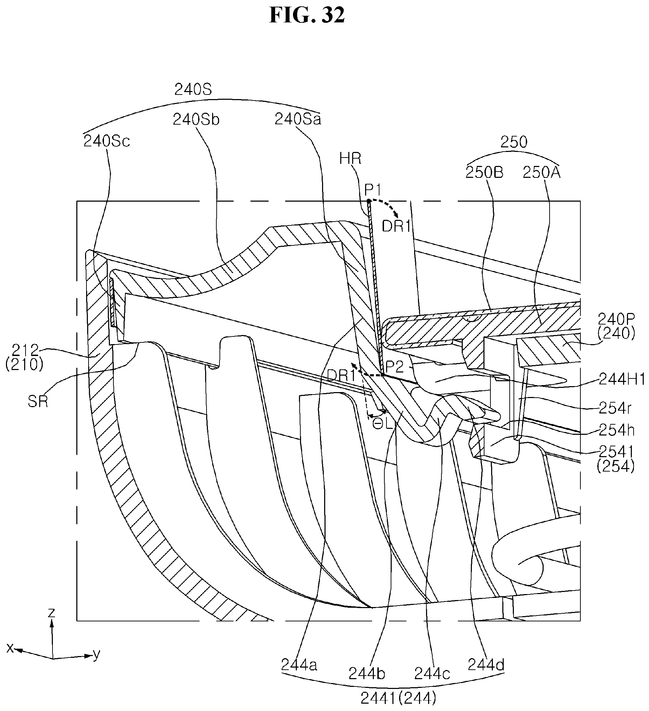

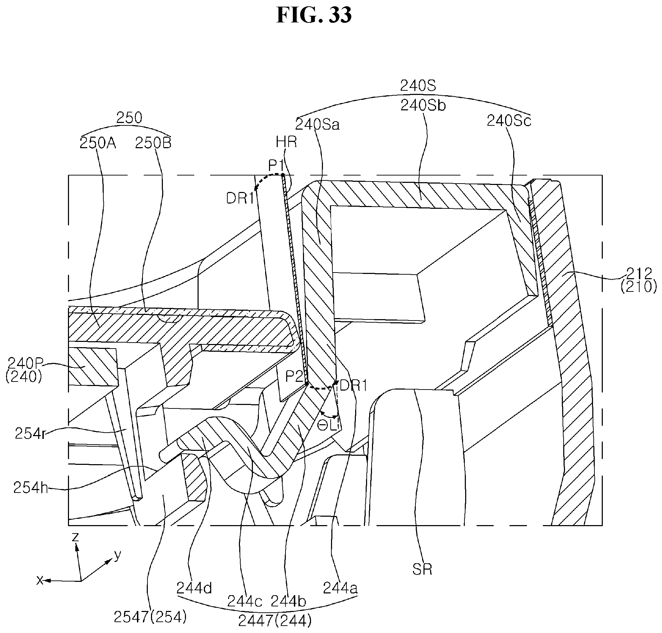

Referring to FIGS. 32 and 33, the latch 244 may include a first part 244a, a second part 244b, a third part 244c, and a fourth part 244d. The second to fourth parts 244b, 244c, and 244d may be referred to as a bending portion 244b, 244c, 244d.

The first part 244a may be a portion of the side part 240S of the middle frame 240. The second part 244b may be bent from the first part 244a toward the latch hole of the middle frame 240. The angle (theta L) at which the second part 244b is bent from the first part 244a may be an acute angle. The third part 244c may be bent in a first direction from the second part 244b, and the third part 244c and the second part 244b may have an overall V or U shape. The fourth part 244d may be bent in a second direction opposite to the first direction from the third part 244c, and the fourth part 244d and the third part 244c have an overall inverted v or inverted u shape. For example, the angle between the fourth part 244d and the third part 244c may be greater than the angle between the third part 244c and the second part 244b.

A user may move the inner cover 250 so that the holder 254 of the inner cover 250 is engaged with the latch 244 of the middle frame 240. The fourth part 244d of the latch 244 may be inserted into the hole 254h of the holder 254, and the rear boundary of the hole 254h may be engaged with the distal end of the fourth part 244d. The rib 254r may be formed on one side of the holder 254 and may improve the rigidity of the holder 254. The latch 244 and holder 254 may be referred to as the fourth coupling set 244, 254. A user may bend the latch 244 by pressing the holder 254 placed on the fourth part 244d of the latch 244 in a rearward direction, and the holder 254 may move toward the rear of the bent latch 244. Then, the holder 254 may be engaged with the latch 244 restored to its original state.

Accordingly, the portion adjacent to the lower side of the inner cover 250, the lower portion of the left side, and the lower portion of the right side may be caught by the middle frame 240. That is, the inner cover 250 may be coupled to the middle frame 240.

At this time, the first coupling set 241, 251 (see D in FIG. 23) and the second coupling set 242, 252 (see E in FIG. 23) may be located above the horizontal line passing through the center of the inner cover 250, and the fourth coupling set 244, 254 (see G in FIG. 23) may be located below the horizontal line passing through the center of the inner cover 250. The third coupling set 243, 253 (see F in FIG. 23) may be located near the center of the inner cover 250. The portion of the inner cover 250 above the horizontal line may be referred to as an upper portion of the inner cover 250, and the portion of the inner cover 250 below the horizontal line may be referred to as a lower portion of the inner cover 250. That is, a user may couple the area near the upper edge of the inner cover 250 to the middle frame 240 by using the first coupling set 241, 251 (see D in FIG. 23) and the second coupling set 242, 252 (see E in FIG. 23), and couple the area near the lower edge of the inner cover 250 to the middle frame 240 by using the fourth coupling set 244, 254 (see G in FIG. 23). In addition, since the area near the center of the inner cover 250 is coupled to the middle frame 240 by using the third coupling set 243, 253 (see F in FIG. 23), the lifting of the area near the center of the inner cover 250 can be minimized.

A user may insert a tool HR between the side part 240S of the middle frame 240 and the inner cover 250. The tool HR may be referred to as a bar HR, a plate HR, a spatula HR, or a hera HR. A user may rotate the tool HR in one direction DR1 to push the first part 244a and/or the second part 244b to remove the latch 244 from the hole 254h of the holder 254. A first point P1 may be a force point, and a second point P2 may be a fulcrum point. At this time, since the second part 244b is bent from the first part 244a (see theta L), a user may apply a relatively small force to the tool HR to flip the latch 244. Accordingly, a user may disconnect seven fourth coupling sets 244 and 254 (see G in FIG. 23). Then, a user may disconnect two third coupling sets 243, 253 (see F in FIG. 23), disconnect two second coupling sets 242, 252 (see E in FIG. 23), and disconnect four first coupling sets 241, 251 (see D in FIG. 23).

Accordingly, the inner cover 250 may be separated from the middle frame 240. That is, the inner cover 250 may be easily coupled to or separated from the middle frame 240, and damage to the inner cover 250 and/or the middle frame 240 can be minimized during the assembly and disassembly operations of the inner cover 250 and the middle frame 240.

For example, a user may remove the inner cover 250 from the middle frame 240, due to a reason of decontaminating the fabric material cover 250B, or may replace the existing inner cover 250 with a new inner cover 250, due to a reason of changing the color or pattern of the fabric material cover 250B.

Meanwhile, the side part 240S of the middle frame 240 may form a step that is raised in a forward direction from the base part 240P of the middle frame 240. The middle frame 240 may include a first part 240Sa, a second part 240Sb, and a third part 240Sc. The first part 240Sa may be bent in a forward direction from the circumference of the base part 240P. The second part 240Sb may be bent in the horizontal direction from the front end of the first part 240Sa. The third part 240Sc may be bent in a rearward direction from the distal end of the second part 240Sb. The first to third parts 240Sa, 240Sb, and 240Sc may have a U-shaped cross section. The front ends of the side ribs SR formed inside the side part 212 of the outer cover 210 may support the rear end of the third part 240Sc. The front ends of the corner ribs CR (see FIG. 13) formed at a corner formed by the side part 212 of the outer cover 210 may also support the rear end of the third part 240Sc.

Accordingly, the side ribs SR can prevent the side part 240S from sagging in a rearward direction.

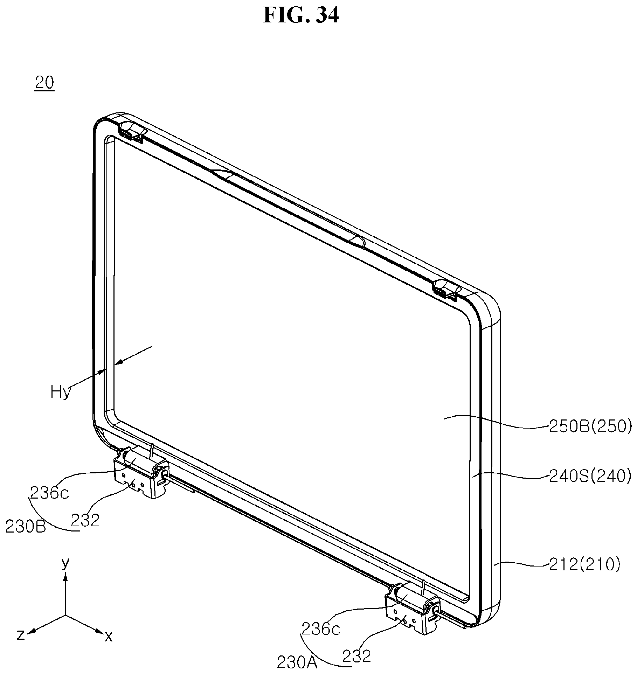

Referring to FIG. 34, the front surface (i.e., the front surface of the cover 250B) of the inner cover 250 may form a step that is lowered from the front surface (i.e., the front surface of the second part 240Sb) of the side part 240S of the middle frame 240 in a rearward direction. The distance Hy between the front surface of the inner cover 250 and the front surface of the side part 240S of the middle frame 240 may be referred to as a depression depth Hy of the inner cover 250.

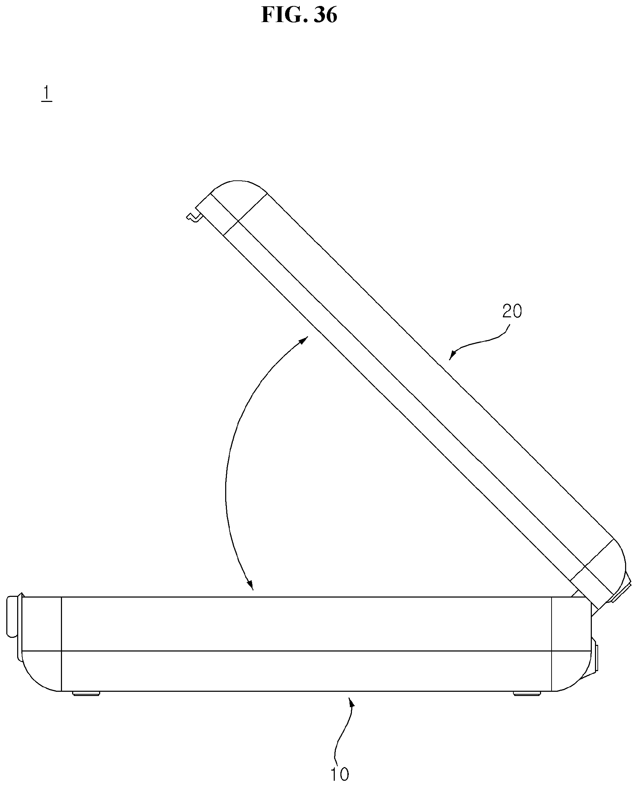

Referring to FIGS. 35 and 36, the cover 20 may close or open the base 10. The display 70 (see FIG. 10) may be located between the closed cover 20 and the base 10, and the display panel 71 of the display 70 may face the inner cover 250. The display 70 may be located in a space of the cover 20 forming a depression depth Hy (see FIG. 34), and adjacent to or in contact with the surface (i.e., the surface of the cover 250B) of the inner cover 250.

Referring to FIGS. 1 to 36, a display device includes: a display; a base to which the display is movably coupled; and a cover which is hinged to the base, and opens or closes the base, in which the cover includes: an outer cover; a middle frame coupled to the outer cover; an inner cover opposite to the outer cover with respect to the middle frame; and coupling sets which are disposed along an edge of the inner cover and couple the inner cover to the middle frame.

The display is stored between the base and the cover, and the inner cover of the cover faces the display.

The coupling set includes: an insertion protrusion formed in the middle frame while being adjacent to one side of the middle frame; and a ring which is formed on one surface of the inner cover facing the middle frame, and has a hole into which the insertion protrusion is inserted.

The coupling set further includes: a latch which is formed in the middle frame while being adjacent to the other side of the middle frame; and a holder which is formed on the one surface of the inner cover, and engaged with the latch.

The middle frame includes: a base part facing the inner cover; a side part which is formed around the base part, and surrounds a lateral side of the inner cover; and a latch hole formed around the latch, in which the latch has elasticity, in which the latch includes: a first part formed on the side part; and a bending portion which is bent from the first part toward the latch hole, and inserted into a hole of the holder.

The bending portion includes: a second part bent from the first part; a third part bent in a first direction from the second part; and a fourth part which is bent from the third part in a second direction opposite to the first direction and is inserted into the hole of the holder, in which the holder is engaged with the fourth part.

A gap is formed between the first part and the inner cover.

The outer cover includes: a center part facing the base part; a side part formed around the center part; and a side rib formed on an inner surface of the side part, in which the side part of the middle frame is located on the side rib of the outer cover.

The inner cover is quadrangle, in which the ring includes a plurality of rings arranged along one side of the inner cover, in which the holder includes a plurality of holders arranged along remaining three sides of the inner cover, in which a straight line which passes through a center of the inner cover and is parallel to the one side is located between the rings and the holders.

The coupling set further includes: a locking protrusion which is formed on the one surface of the inner cover while being adjacent to the other side of the inner cover, and located between the rings and the straight line; and an insertion hole which is formed in the middle frame, and with which the locking protrusion is engaged.

The coupling set further includes: a holding protrusion which is formed on the one surface of the inner cover, and adjacent to a central portion of the inner cover; and a support protrusion which is formed on the middle frame, and with which the holding protrusion is engaged.

The middle frame includes: a base part; and a side part which is formed around the base part, and forms a step raised from the base part, in which the inner cover is coupled to the base part, and forms a step lowered from the side part.

The outer cover includes fixing portions protruding from the inside of the outer cover, in which the middle frame includes: a base part facing the outer cover; and coupling portions which protrude from the base part toward the outer cover, and are coupled to the fixing portions, in which the base part is spaced apart from the inside of the outer cover.

The middle frame includes: a base part on which the inner cover is seated; and a pressed portion formed by being pressed from the base part toward the outer cover.

The display device further includes a speaker assembly mounted on the outer cover at between the middle frame and the outer cover, in which each of the middle frame and the inner cover includes holes.

Certain embodiments or other embodiments of the disclosure described above are not mutually exclusive or distinct from each other. Any or all elements of the embodiments of the disclosure described above may be combined with another or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device comprising:
a display;
a base to which the display is movably coupled; and
a cover which is hinged to the base, and opens or closes the base,
wherein the cover comprises:
an outer cover;
a middle frame coupled to the outer cover;
an inner cover opposite to the outer cover with respect to the middle frame; and
coupling sets which are disposed along an edge of the inner cover and couple the inner cover to the middle frame.

2. The display device of claim 1, wherein the display is stored between the base and the cover, and the inner cover of the cover faces the display.

3. The display device of claim 1, wherein the coupling set comprises:
an insertion protrusion formed in the middle frame while being adjacent to one side of the middle frame; and
a ring which is formed on one surface of the inner cover facing the middle frame, and has a hole into which the insertion protrusion is inserted.

4. The display device of claim 3, wherein the coupling set further comprises:
a latch which is formed in the middle frame while being adjacent to the other side of the middle frame; and
a holder which is formed on the one surface of the inner cover, and engaged with the latch.

5. The display device of claim 4, wherein the middle frame comprises:
a base part facing the inner cover;
a side part which is formed around the base part, and surrounds a lateral side of the inner cover; and
a latch hole formed around the latch,
wherein the latch has elasticity,
wherein the latch comprises:
a first part formed on the side part; and
a bending portion which is bent from the first part toward the latch hole, and inserted into a hole of the holder.

6. The display device of claim 5, wherein the bending portion comprises:
a second part bent from the first part;
a third part bent in a first direction from the second part; and
a fourth part which is bent from the third part in a second direction opposite to the first direction and is inserted into the hole of the holder,
wherein the holder is engaged with the fourth part.

7. The display device of claim 5, wherein a gap is formed between the first part and the inner cover.

8. The display device of claim 5, wherein the outer cover comprises:
a center part facing the base part;
a side part formed around the center part; and
a side rib formed on an inner surface of the side part,
wherein the side part of the middle frame is located on the side rib of the outer cover.

9. The display device of claim 4, wherein the inner cover is quadrangle,
wherein the ring comprises a plurality of rings arranged along one side of the inner cover,
wherein the holder comprises a plurality of holders arranged along remaining three sides of the inner cover,
wherein a straight line which passes through a center of the inner cover and is parallel to the one side is located between the rings and the holders.

10. The display device of claim 9, wherein the coupling set further comprises:
a locking protrusion which is formed on the one surface of the inner cover while being adjacent to the other side of the inner cover, and located between the rings and the straight line; and
an insertion hole which is formed in the middle frame, and with which the locking protrusion is engaged.

11. The display device of claim 9, wherein the coupling set further comprises:
a holding protrusion which is formed on the one surface of the inner cover, and adjacent to a central portion of the inner cover; and
a support protrusion which is formed on the middle frame, and with which the holding protrusion is engaged.

12. The display device of claim 1, wherein the middle frame comprises:
a base part; and
a side part which is formed around the base part, and forms a step raised from the base part,
wherein the inner cover is coupled to the base part, and forms a step lowered from the side part.

13. The display device of claim 1, wherein the outer cover comprises fixing portions protruding from the inside of the outer cover,
wherein the middle frame comprises:
a base part facing the outer cover; and
coupling portions which protrude from the base part toward the outer cover, and are coupled to the fixing portions,
wherein the base part is spaced apart from the inside of the outer cover.

14. The display device of claim 1, wherein the middle frame comprises:
a base part on which the inner cover is seated; and
a pressed portion formed by being pressed from the base part toward the outer cover.

15. The display device of claim 1, further comprising a speaker assembly mounted on the outer cover at between the middle frame and the outer cover,
wherein each of the middle frame and the inner cover includes holes.
